# EUROPEAN PATENT SPECIFICATION

(11) **EP 4 703 970 B1**
(45) Date of publication and mention of the grant of the patent: **07.10.2026**
(21) Application number: 25195889.8
(22) Date of filing: 14.08.2025
(51) Int. Cl.: G06N 3/045, G06N 3/0475, G06N 3/08

(54) **COMPUTER-IMPLEMENTED METHOD, COMPUTER PROGRAM PRODUCT AND COMPUTER SYSTEM FOR IMAGE GENERATION AND VALIDATION**
COMPUTERIMPLEMENTIERTES VERFAHREN, COMPUTERPROGRAMMPRODUKT UND COMPUTERSYSTEM ZUR BILDERZEUGUNG UND -VALIDIERUNG
PROCÉDÉ MIS EN UVRE PAR ORDINATEUR, PRODUIT DE PROGRAMME INFORMATIQUE ET SYSTÈME INFORMATIQUE POUR LA GÉNÉRATION ET LA VALIDATION D'IMAGES

(30) Priority: 31.08.2024 FR 2409304
(43) Date of publication of application: 04.03.2026
(73) Proprietor: Accenture Global Solutions Limited, Dublin 4 (IE)
(72) Inventor: VADLAMANI, Surya Raghavendra, Newtown (US); RINAUDO, Clement, Beausoleil (FR); THEVENIN, Vincent, Courbevoie (FR); WADHWA, Neha, New Delhi (IN); NARESSI, Alex, Valbonne (FR); CAPPELIER, Chloe, Antibes (FR)
(74) Representative: Müller-Boré & Partner Patentanwälte PartG mbB

(56) References cited:
- YUHENG FENG ET AL: "Reflective Human-Machine Co-adaptation for Enhanced Text-to-Image Generation Dialogue System", ARXIV.ORG, CORNELL UNIVERSITY LIBRARY, 201 OLIN LIBRARY CORNELL UNIVERSITY ITHACA, NY 14853, 27 August 2024 (2024-08-27), XP091864809
- LIANG YOUWEI ET AL: "Rich Human Feedback for Text-to-Image Generation", 2024 IEEE/CVF CONFERENCE ON COMPUTER VISION AND PATTERN RECOGNITION (CVPR), 9 April 2024 (2024-04-09), pages 19401 - 19411, XP093207550, Retrieved from the Internet <URL:https://arxiv.org/pdf/2312.10240> [retrieved on 20250217], DOI: 10.1109/CVPR52733.2024.01835
- LEE TONY ET AL: "Holistic Evaluation of Text-to-Image Models", 7 November 2023 (2023-11-07), XP093251115, Retrieved from the Internet <URL:https://arxiv.org/abs/2311.04287> [retrieved on 20250217]

## Description

### FIELD OF THE INVENTION

Various embodiments described herein relate generally to computer-implemented method, computer system, and computer program product for generation and validation of Generative Artificial Intelligence (GAI) images.

### BACKGROUND

Humankind is entering a novel era of creativity - an era in which anybody can generate digital content. Artificial Intelligence finds implementations in different use cases in the context of the digital content generation. In the field of AI, Generative AI (GAI) has found effective application in text-to-image generation, where it is being used to generate images from zero-shot text prompts in natural language for the purpose of creating realistic and diverse images.
Referring to document (Reflective Human-Machine Co-adaptation Strategy (RHM-CAS) for enhanced text-to-image generation dialogue system) that deals with an image generation system, RHM-CAS involves an enhanced Text-to-Image dialogue-based Agent. The Agent leverages both external interactions with users and internal reflections to enhance its performance. Externally, the Agent engages in meaningful language interactions with users to reflect on and refine the generated images. Internally, the Agent tries to optimize the policy based on user preferences, ensuring that the final outcomes closely align with user preferences.

### SUMMARY

Implementations of the present disclosure are generally directed to generation and validation/assessment of Generative Artificial Intelligence (GAI) images with reduced user intervention and power consumption. The images are validated using text description/text prompt matching, neuroaesthetics criteria, and heat maps.
The present invention is defined in the independent claims. Preferred embodiments are defined by the dependent claims. Further aspects and examples are provided for facilitating the understanding of the invention.

The details of one or more implementations of the present disclosure are set forth in the accompanying drawings and the description below. Other features and advantages of the present disclosure will be apparent from the description and drawings, and from the claims.

### BRIEF DESCRIPTION OF THE FIGURES

Various embodiments in accordance with the present disclosure will be described with reference to the drawings, in which:
FIG. 1 depicts an example environment that may be used to execute implementations of the present disclosure.
FIG. 2 depicts an example architecture of a computing system for image generation and validation in accordance with implementations of the present disclosure.
FIG. 3 is a schematic diagram of an image generation and validation engine of the computing system for image generation and validation in accordance with implementations of the present disclosure.
FIG. 4 is a block diagram that presents an example of a first validator for validating a Generative Artificial Intelligence (GAI) image based on text prompt matching in accordance with implementations of the present disclosure.
FIG. 5 is a block diagram that presents an example of a second validator for validating the GAI image based on a list of neuroaesthetics criteria in accordance with implementations of the present disclosure.
FIG. 6 is a block diagram that presents an example of a third validator for validating the GAI image based on a heat map in accordance with implementations of the present disclosure.
FIG. 7 is a flow diagram that presents an example computer-implemented method for generation and validation of GAI images in accordance with implementations of the present disclosure.
FIGS. 8A-8B, 9A-9B, 10A-10B, and 11A-11B depict generation of acceptable GAI images in accordance with implementations of the present disclosure.
FIG. 12 illustrates a computer system that may be used to implement generation and validation of the GAI images in accordance with implementations of the present disclosure.

Like reference numbers and designations in the various drawings indicate like elements.

### DETAILED DESCRIPTION

Reference to any "example" (e.g., "for example", "an example of", by way of example" or the like) are to be considered non-limiting examples regardless of whether expressly stated or not.

The terms used in this specification generally have their ordinary meanings in the art, within the context of the disclosure, and in the specific context where each term is used. Alternative language and synonyms may be used for any one or more of the terms discussed herein, and no special significance should be placed upon whether or not a term is elaborated or discussed herein. Synonyms for certain terms are provided. A recital of one or more synonyms does not exclude the use of other synonyms. The use of examples anywhere in this specification including examples of any terms discussed herein is illustrative only and is not intended to further limit the scope and meaning of the disclosure or of any exemplified term. Likewise, the disclosure is not limited to various embodiments given in this specification.

Without intent to limit the scope of the disclosure, examples of instruments, apparatus, methods, and their related results according to the embodiments of the present disclosure are given below. Note that titles or subtitles may be used in the examples for convenience of a reader, which in no way should limit the scope of the disclosure. Unless otherwise defined, technical and scientific terms used herein have the meaning as commonly understood by one of ordinary skill in the art to which this disclosure pertains. In the case of conflict, the present document, including definitions will control.

The term "comprising" when utilized means "including, but not necessarily limited to"; it specifically indicates open-ended inclusion or membership in the so-described combination, group, series and the like.

The term "a" means "one or more" unless the context clearly indicates a single element.

"First," "second," etc., are labels to distinguish components or blocks of otherwise similar names but does not imply any sequence or numerical limitation.

"And/or" for two possibilities means either or both of the stated possibilities ("A and/or B" covers A alone, B alone, or both A and B take together), and when present with three or more stated possibilities means any individual possibility alone, all possibilities taken together, or some combination of possibilities that is less than all of the possibilities. The language in the format "at least one of A ... and N" where A through N are possibilities means "and/or" for the stated possibilities (e.g., at least one A, at least one N, at least one A and at least one N, etc.).

It should also be noted that in some alternative implementations, the functions/acts noted may occur out of the order noted in the figures. For example, two steps disclosed or shown in succession may in fact be executed substantially concurrently or may sometimes be executed in the reverse order, depending upon the functionality/acts involved.

Specific details are provided in the following description to provide a thorough understanding of embodiments. However, it will be understood by one of ordinary skill in the art that embodiments may be practiced without these specific details. For example, systems may be shown in block diagrams so as not to obscure the embodiments in unnecessary detail. In other instances, well-known processes, structures, and techniques may be shown without unnecessary detail in order to avoid obscuring example embodiments.

Generative Artificial Intelligence (GAI) has become popular and interactive paradigm for image generation. GAI includes text-to-image models, which are used for generation of realistic and diverse images (hereinafter referred as GAI images) based on text prompts.

An exemplary GAI based image generation enables a user to prompt the text-to-image models of GAI for generation of the GAI images. To illustrate, a user provides inputs describing what the user needs in a desired GAI image. The inputs are enhanced into a text prompt via a preprocessing. The enhanced text prompt is submitted to the text-to-image models for generation of the GAI image. The GAI image is presented to the user. The user has to either accept the generated GAI image or enter new information to generate a new GAI image, if the user is not satisfied with the generated GAI image. The new information includes modification of the inputs originally provided by the user. The new information can be resubmitted to the text-to-image models for regenerating the new GAI image. Such a process of resubmission and regeneration continues until the user accepts the GAI image or give up. Therefore, the exemplary GAI based image generation operates in a take it or leave it fashion and requires a high degree of iteration and experimentation to attain a satisfactory GAI image.

The traditional methodologies for image generation have several technical problems. Validating quality and authenticity of the GAI image is highly a visual and subjective process, which necessitates a level of discernment and subjective judgment that is inherently made by the user. For example, what visually appeals to one user may not appeal to another user. The user may look at the image and manipulate the inputs/text prompt relying on their judgement until obtaining the satisfactory GAI image. However, the exemplary GAI based image generation have no specific way to account for preferences/subjective taste of the user. Therefore, the user has to subjectively identify what their preferences about the image and manually try to alter the image to their preferences by modifying the inputs/text prompt.

In addition, as the validation of the GAI image is highly a subjective process, the user may not even know what exactly is wrong with the GAI image other than disliking the generated GAI image. Therefore, the user may not be able to provide the sufficient inputs in a next loop for prompting the text-to-image models for obtaining the satisfactory GAI image, which results in user's dissatisfaction. By way of analogy, the image may be worth of 1000 words, but the exemplary GAI based image generation does not provide a mechanism for enabling the user to find those appropriate words required to generate the image what the user is attempting to describe. Furthermore, nuanced nature of aesthetic preferences, contextual understanding, and ethical considerations introduce complexities in devising comprehensive validation of the GAI image. Consequently, striking a balance between the creative potential of the GAI image and the need of manual effort for discernment of the GAI image raises critical questions about the reliability, interpretability, and ethical implications of validating the GAI image.

Therefore, with the exemplary GAI based image generation, a probability of user's dissatisfaction towards the GAI images is high, which results in a larger number of resubmission-review loops and requires extensive user interactions. Also, each resubmission loop carries its own power requirements. Therefore, prompting the text-to-image models for generation of the GAI images consume considerable amount of energy and processing capacity. Further, continuous resubmission loops for revised GAI images become a collective power drain.

In view of this, implementations of the present disclosure enable efficient validation of the GAI images by increasing a probability of acceptance of the GAI images and reducing overall power consumption required to reach the acceptance of the GAI images.

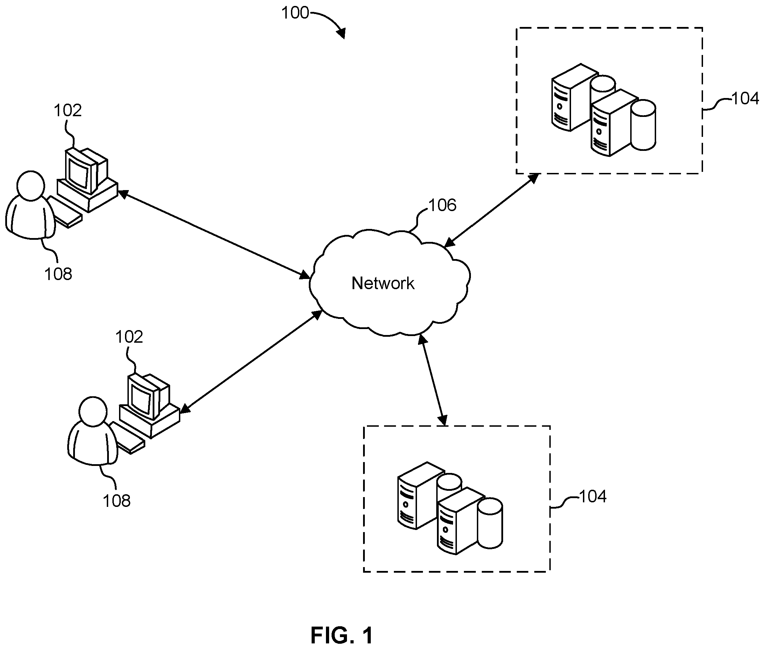

FIG. 1 depicts an example environment 100 that may be used to execute implementations of the present disclosure. In some examples, the example environment 100 manages generation and validation of images.

As depicted in FIG. 1, the example environment 100 includes one or more computing devices 102, one or more computing systems 104, and a network 106. The computing device 102 and the computing system 104 may communicate with each other using the network 106. In some examples, the network 106 may include a Local Area Network (LAN), a Wide Area Network (WAN), the Internet, or a combination thereof. In some examples, the network 106 may be accessed over a wired and/or a wireless communication link.

In some examples, the computing device 102 is used by a respective user 108 to log into and interact with computing platforms executing image generation applications. Examples of the computing device 102 may include a desktop computing device, a smartphone, a laptop, tablet, a voice-enabled device, and/or the like. It is contemplated that implementations of the present disclosure may be realized with any appropriate type of computing device. Examples of the computing platforms may include content delivery platforms, multimedia-based platforms, and/or the like. In some examples, the computing device 102 may display one or more Graphical User Interfaces (GUIs) that enable the user 108 to interact with the computing platform executing the image generation applications. Interacting with the computing platform may include providing information for generating an image(s). The information may describe features of the image to be generated. In some examples, the information may be provided in a form of text prompts for generating the image.

In some examples, the computing system 104 may be implemented as an on-premises system that is operated by an enterprise or a third-party engaged in cross-platform interactions and image generation management. In some examples, the computing system 104 may be implemented as an off-premises system (for example, cloud or on-demand) that is operated by an enterprise or a third-party on behalf of an enterprise. In some examples, the computing system 104 may be implemented in a cloud environment. For simplicity, the computing system 104 depicted in FIG. 1 may be a cloud environment that is intended to represent various forms of servers including a web server, an application server, a proxy server, a network server, a server pool, and/or the like.

In some examples, the computing system 104 hosts the image generation applications, which may be executed on the computing platforms (with which the user 108 of the computing device 102 can interact for generation of the images). The image generation applications may provide image generation functions or services.

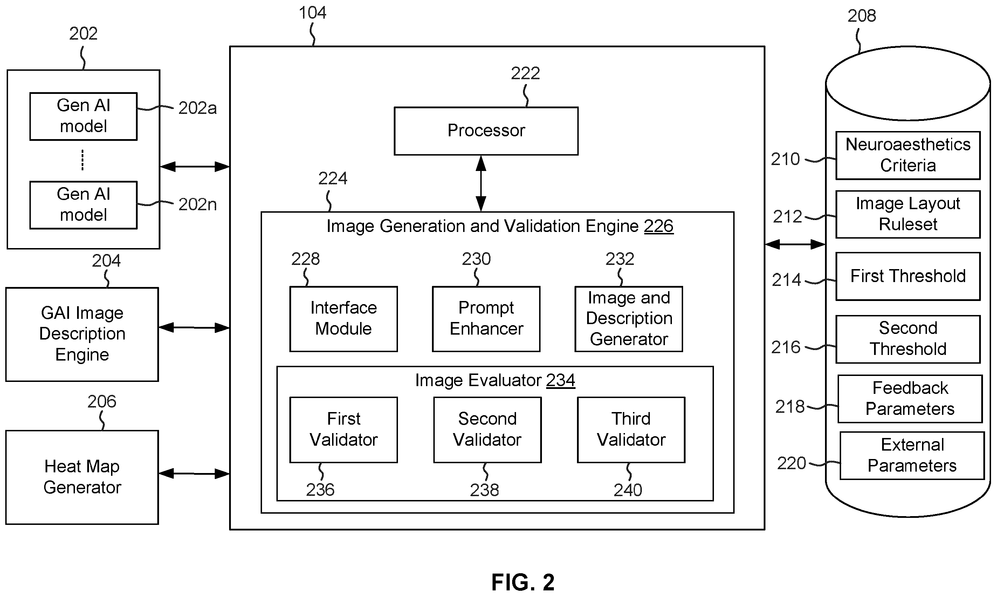

In accordance with implementations of the present disclosure, the computing system 104 enables generation of the images based on the information received from the computing device 102 and validation/assessment of the generated images. The computing system 104 is described in detail along with FIG. 2.

FIG. 2 depicts an example architecture of the computing system 104 for image generation and validation in accordance with implementations of the present disclosure. As depicted in FIG. 2, the computing system 104 may be configured to communicate with a Generative Artificial Intelligence (GAI) image generator 202, a GAI image description engine 204, a heat map generator 206, and a datastore 208.

The GAI image generator 202 generates the images based on the text prompts. Hereinafter, the images generated using the GAI image generator 202 are referred to as GAI images. The GAI image generator 202 may include one or more GAI models 202a-202n/text-to-image models, which may be prompted to generate/create the GAI images based on the text prompts. The GAI models 202a-202n may be trained using deep learning techniques. The deep learning techniques may enable the GAI models 202a-202n to learn patterns and features from a vast amount of training data for generating the GAI images. In some examples, the GAI models 202a-202n may be classified as for example, Variational Autoencoders (VAEs), or Generative Adversarial Networks (GAN), which are known and not further described herein.

While implementations of the present disclosure are described in further detail herein with non-limiting reference to the GAI image generator 202 including the GAI models 202a-202n for generation of the GAI images, it is contemplated that implementations of the present disclosure may be realized using any appropriate Machine Learning (ML) models, or Artificial Intelligence (AI) models, as well.

The GAI image description engine 204 generates GAI text descriptions for the GAI images generated by the GAI image generator 202. The GAI text descriptions may be generated in a natural language format. The GAI text descriptions describe various features of the generated GAI images. In some examples, the features of the GAI image may indicate characteristics of objects present in the GAI image, details about surrounding environment of the objects, visual features of the GAI image. The visual features may be related to aspects such as appearance, style, presentation, perspective, and/or the like, Examples of the visual features may include, but not limited to, a type of the GAI image, color, intensity features, texture patterns, image layout features (shape, structure, or the like), neuroaesthetics items, and/or the like. In some examples, the GAI image description engine 204 may employ various models for example, foundation models/Large Language Models (LLMs) (for example, GPT Vision), computer-vision models, ML models, AI models, and/or the like, for generating the GAI text descriptions. Such models are already known and not further described herein.

The heat map generator 206 generates heat maps of the GAI images generated by the GAI image generator 202. A heat map of the GAI image may provide clear insights on areas/regions of the GAI image that are of interest to the user or that require visual attention focus. The areas/regions may be related to visual attractiveness of the GAI image. Therefore, the user may focus on such visually attractive areas/regions in the GAI image. A non-limiting methodology for generating the heat map is using a CRISP engine, such as disclosed in US patent US10957086B1.

The datastore 208 may act as repository for storing various data required for validation of the GAI images. The datastore 208 may include a list of neuroaesthetics criteria 210 defined for generation of the specific GAI images, image layout ruleset 212, first and second thresholds 214-216 defined for validation of the GAI images, a set of feedback parameters 218, one or more sets of external parameters 220, and/or the like.

The list of neuroaesthetics criteria 210 defines multiple items/neuroaesthetics items to be evaluated in the generated GAI images. The items defined by the list of neuroaesthetics criteria are related to the visual features/appearances of the GAI images that the user finds generally pleasing. Such items may be evaluated to find an emotional response probably to be received from the user to the GAI images. The multiple items may be defined in accordance with aesthetics preferences of the user, ethical considerations, and/or the like. The aesthetic preferences of the user may be collected and used only based on an explicit consent received from the user. Further, the aesthetic preferences of the user may be stored and deleted as per regulations and the user's prior consent. Therefore, implementations of the present disclosure operate only on the small slice of data that the user has consented to, and do not operate on a full brain scan worth of data. The ethical considerations may indicate one or more of: laws, rules, and regulations applicable for generation of the GAI images.

In some implementations, the multiple items on the list of neuroaesthetics criteria 210 may be indicative of colors, shapes, objects, and/or the like. For instance, the list of neuroaesthetics criteria may indicate to evaluate the items such as: colors are pale, shapes are round, trees are present, and/or the like in the generated GAI image.

The list of neuroaesthetics criteria 210 may define any number of items based on variance of the GAI images that the computing system 104 can generate in accordance with implementation of the present disclosure. For example, the neuroaesthetics criteria 210 may define 10-20 items to be presented in the GAI image. Further, each of the items defined by the list of neuroaesthetics criteria 210 may be assigned with a weight, which indicates priority/importance of the respective item. Therefore, the items may be evaluated in the GAI image according to their weights. For example, if an item "color" is assigned with a weight greater than an item "tree" (an example of the object), then it is to be understood that colors are more important than trees for validation.

The image layout ruleset 212 may be used in validation of the GAI images. The image layout ruleset 212 indicates geometrical characteristics of the objects to be evaluated in the GAI images. In some examples, the image layout ruleset 212 may indicate symmetry, proportion, size, and/or the like of the objects. The image layout ruleset 212 may be defined and dynamically varied based on generation of the specific GAI images.

The first and second thresholds 214-216 may be used in validation of the GAI images (described in detail below). In some examples, the user may be enabled to set and fine-tune the first and second thresholds 214-216 according to generation of the specific GAI images. In some examples, the computing system 104 may determine and dynamically fine-tune the first and second thresholds 214-216 based on any of the already generated GAI images (for example, any previously generated GAI images) that have been validated successfully and accepted by the user.

The set of feedback parameters 218 may include parameters to be considered for generation of the GAI images. The parameters may be collected and stored based on validations of previous GAI images. The parameters may be indicative of problems in the previous GAI images due to which validations of the previous GAI images had been failed. The parameters may indicate one or more of: contextual information, visual features, unbiased data for biased data, and/or the like, to be considered for generation of the specific GAI images.

The set of external parameters 220 may include parameters to be considered for generation and validation of the GAI images. The parameters may include brand ruleset, finetuning parameters, guidelines, and/or the like. The brand ruleset may be considered for generation of the GAI images related to any products and may relate to branding of the products. The brand ruleset may include considerations such as color(s), alignment of content for the product, and/or the like. Therefore, the brand ruleset may support generation of the GAI images associated with specific emotions, and attributes related to the corresponding products. The guidelines may specify rules that prevent creation of specific contents in the GAI images. The contents to be prevented in the GAI images may include offensive contents, or contents that are in violation of laws, rules, and regulations, or contents including sensitive or protected data, or the like. The guidelines may also specify rules for removal of the biased data in the GAI images. The image generation and validation are described in detail below along with components of the computing system 104.

Still referring to FIG. 2, the computing system 104 includes one or more processors 222, and a memory 224. The computing system 104 may also include other components such as communication interfaces, Input/Output (I/O) devices, and so on (not shown in FIG. 2).

In some examples, the processor 222 may include, but not limited to, microprocessors, microcomputers, microcontrollers, digital signal processors, central processing units, state machines, logic circuits, Application Specific Integrated Circuits (ASICs), Field Programmable Gate Arrays (FPGAs), and/or any devices that manipulate data or signals based on operational instructions. Among other capabilities, the processor 222 may be programmed to cooperate with computer-readable instructions stored in the memory 224 (also referred to be as computer-readable medium) for performing operations according to the present disclosure. The memory 224 may be non-transitory or non-volatile medium, such as a magnetic disk or solid-state non-volatile memory or volatile medium such as Random Access Memory (RAM), and/or the like.

The computing system 104 further includes an image generation and validation engine 226, as depicted in FIG. 2. The image generation and validation engine 226 may be stored in the memory 224 and provided as a downloadable library including the computer-readable instructions. The image generation and validation engine 226 may be executed on the processor 222 for generation and validation of the GAI images.

The image generation and validation engine 226 includes an interface module 228, a prompt enhancer 230, an image and description generator 232, and an image evaluator 234 (also referred to as image filter).

The interface module 228 may represent one or more front-end components/interfaces of the image generation application. The image generation application can be executed on the computing platform with which the user/computing device 102 may interact to provide the information (also be referred to as first intention prompt, initial text prompt, or the like) describing features of a desired GAI image. In some examples, the information may be received through various modalities including, but not limited to, an input to a chatbot, information provided through a GUI, and/or the like. In some examples, the features of the desired GAI image may indicate one or more of: object(s) to be present in the desired GAI image, an environment in which the objects to be present, visual features of the desired GAI image, and/or the like. Therefore, the features provide a context for generation of the GAI image.

Once the information is received, the prompt enhancer 230 enhances the received information into a text prompt. In some implementations, enhancing the received information into the text prompt may involve adding additional information to the received information. Therefore, the enhanced text prompt may include the received information and the additional information. The additional information may include one or more of: an additional context for generation of the GAI image, GAI specific keywords, a type of the GAI image to be generated, the visual features to be present/enhanced in the GAI image, and/or the like. In some examples, the context may indicate industry/enterprise-based considerations, demography-based considerations, visual appearance of the objects, and/or the like. In some examples, the type of the GAI image to be generated may indicate an acrylic painting-based image, an oil painting-based image, a digitally manipulated image, and/or the like. In some examples, the visual characteristics may indicate color, brightness, contrast, intensity features, textures, layouts, and/or the like, of the GAI image to be generated. In some other examples, the additional information may indicate unbiased data for biased data present in the received information for generation of the desired image.

In some examples, the prompt enhancer 230 may use various models such as, foundation models/LLMs, ML models, AI models, and/or the like, for enhancing the received information into the text prompt. The prompt enhancer 230 may input the received information to one of the models, which is trained to enhance the received information into the text prompt. In some examples, the prompt enhancer 230 may input the received information along with the set of feedback parameters 218 and the set of external parameters 220 to one of the models. The set of feedback parameters 218 and the set of external parameters 220 may be accessed from the datastore 208. The set of feedback parameters 218 may indicate the problems identified with generation of the previous similar GAI image. The set of external parameters 220 may include the brand ruleset, the finetuning parameters, the guidelines, and/or the like. In response to the inputted information and/or the set of feedback parameters 218, the prompt enhancer 230 may receive the enhanced text prompt from the model. Therefore, the enhanced text prompt may be derived based on the additional information/criteria that are determined as appealing to the user or result in a desired user response in the context of user safety.

Based on the enhanced text prompt, the image and description generator 232 enables generation of the GAI image. The image and description generator 232 submits the enhanced text prompt to the GAI image generator 202. In some examples, the image and description generator 232 may submit the enhanced text prompt along with the set of feedback parameters 218 and the set of external parameters 220 (accessed from the datastore 208) to the GAI image generator 202 for generation of the GAI image. In response to the submission, the image and description generator 232 receives the generated GAI image from the GAI image generator 202.

The image and description generator 232 also enables generation of a GAI text description for the generated GAI image. The image and description generator 232 submits the generated GAI image corresponding to the enhanced text prompt to the GAI image description engine 204. In response to the submission, the image and description generator 232 receives the GAI text description of the generated GAI image from the GAI image description engine 204.

The image and description generator 232 provides the generated GAI image and the associated GAI text description to the image evaluator 234 for automatically validating/assessing the generated GAI image.

In accordance with implementations of the present disclosure, the image evaluator 234 validates the GAI image based on multiple criteria such as text description/text prompt matching, the list of neuroaesthetics criteria 210, and the heat maps. Accordingly, the image evaluator 234 includes a first validator 236, a second validator 238, and a third validator 240. The first, second, and third validators 236-240 may operate in a daisy chain fashion. For example, the GAI image successfully validated by the first validator 236 may be sent to the second validator 238. Further, the GAI image successfully validated by the second validator 238 may be sent to the third validator 240 for further validation. All these validators 236-240 are operated in a chain until one of the validators breaks. It should be noted that the first validator 236, the second validator 238, and the third validator 240 may be operated in any other order, although, enabling the third validator 240 to operate at the later stage, which may tend to minimize user interactions and corresponding user reviews.

Further, it can be appreciated that validation of the GAI image according to the present disclosure may be performed by implementing user specified validators along with the first, second, and third validators 236-240, for example, responsible AI based validators, brand compliance-based validators, and/or the like. The user specified validators may be enabled to operate anywhere in the chain of validation of the GAI image.

The first validator 236 validates the GAI image by matching the GAI text description corresponding to the generated GAI image with the enhanced text prompt (which has been used for generating the GAI image). If the GAI text description matches with the enhanced text prompt, the first validator 236 identifies that the GAI image is valid with respect to the information received for generation of the GAI image. If the GAI text description does not match with the enhanced text prompt, the first validator 236 identifies that the GAI image is not valid with respect to the information received for generation of the GAI image.

For validation of the GAI image, the first validator 236 performs a semantic comparison of the GAI text description and the enhanced text prompt. Once the semantic comparison is performed, the first validator 236 generates a score (for example, an arbitrary value) for a result of the semantic comparison using for example, a cosine similarity-based method, which is already known and not further described. Further, the first validator 236 evaluates the score relative to the first threshold 214 accessed from the datastore 208. The first threshold 214 may be a similarity value (for example, in terms of percentile) that has to be satisfied by a result of the semantic comparison. Alternatively, the first threshold 214 may be predetermined or fine-tuned automatically or by the user. The first threshold 214 may have first and second predetermined variances, which aid in identifying whether there are any problems with generation of the GAI image or with enhancing of the information into the text prompt. In some examples, the second predetermined variance may be greater than the first predetermined variance.

If the score is within the first predetermined variance of the first threshold 214, the first validator 236 finds a first type of mismatch between the GAI text description and the enhanced text prompt. The first type of mismatch identifies the problems with generation of the GAI image. Therefore, once the first type of mismatch is found, the image and description generator 232 initiate regeneration of a new GAI image based on the enhanced text prompt and the problems identified in the GAI image. The problems indicate that one or more objects are missing in the generated GAI image, the generated GAI image does not include the visual features, the generated GAI image includes the biased data, and/or the like.

If the score is within the second predetermined variance of the first threshold 214 (for example, the score is beyond the first predetermined variance), the first validator 236 finds a second type of mismatch between the GAI text description and the enhanced text prompt. The second type of mismatch identifies the problems with enhancing of the information into the text prompt. Therefore, once the second type of mismatch is found, the prompt enhancer 230 may perform enhancing and setting of the information received for generation of the GAI image. The prompt enhancer 230 may perform the enhancing and setting of the information based on the enhanced text prompt, and the problems identified within the generated GAI image. Based on the enhanced text prompt, the image and description generator 232 initiates regeneration of the GAI image.

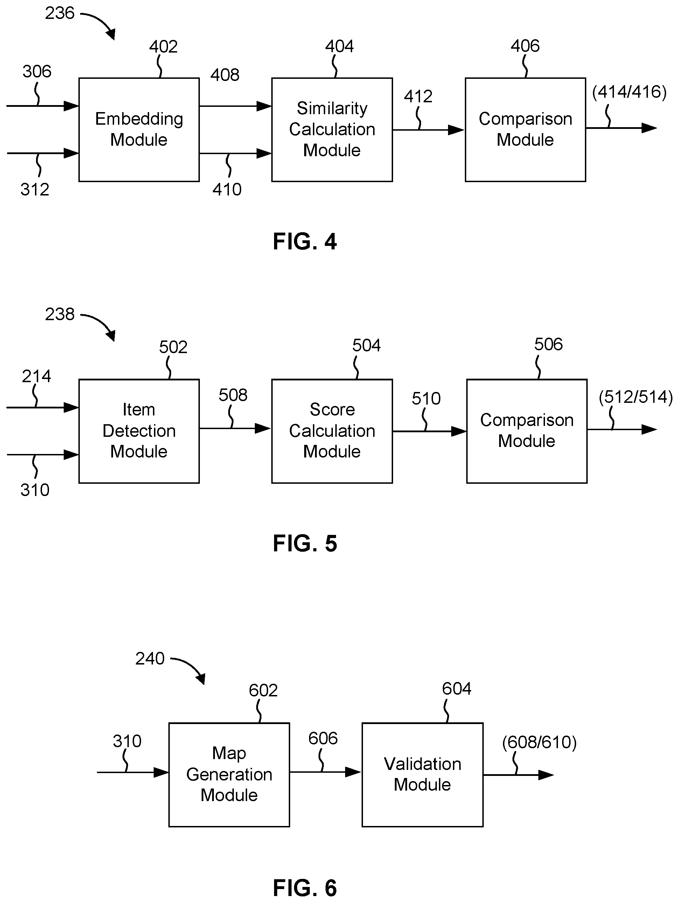

If the score is above the first threshold, the first validator 236 determines that the GAI text description matches the enhanced text prompt, thereby successfully validates the generated GAI image. An exemplary illustration of validating the generated GAI image using the first validator 236 is described in detail in conjunction with FIG. 4. When the first validator 236 successfully validates the GAI image, the second validator 238 may be enabled to operate for further validation.

The second validator 238 validates the generated GAI image based on the list of neuroaesthetics criteria 210. The list of neuroaesthetics criteria 210 predetermined for validation of the GAI images may be accessed from the datastore 208. The list of neuroaesthetics criteria 210 may indicate the multiple items to be evaluated in the generated GAI image. Examples of the items may include luminance, color, faces, bodies, and landscapes related to the objects, emotional aspects, and/or the like.

For validation of the generated GAI image, the second validator 238 submits a query to the GAI image description engine 204. The query includes a request for identifying a number of items (on the list of neuroaesthetics criteria 210) present in the generated GAI image. For the submitted query, the second validator 238 receives a response from the GAI image description engine 204. From the response, the second validator 238 identifies the number of items present in the generated GAI image. The second validator 238 determines whether the number of items present in the generated GAI image satisfies the second threshold 216 (accessed from the datastore 208). The second threshold 216 may indicate a maximum number of items (on the list of neuroaesthetics criteria 210) to be present in the generated GAI image.

If the number of items present in the generated GAI image does not satisfy the second threshold 216, the second validator 238 determines that the generated GAI image does not include sufficient/required items from the list of neuroaesthetics criteria 210. Thereby, a mismatch between the items of the generated GAI image and the items of the list of neuroaesthetics criteria 210 may be identified. Once the mismatch is identified, the prompt enhancer 230 may perform enhancing and setting of the information received for generation of the GAI image into the text prompt. The prompt enhancer 230 may perform the enhancing and setting of the information based on the enhanced text prompt and the items from the list of neuroaesthetics criteria 210 that have not found in the generated GAI image. Based on the enhanced text prompt, the image and description generator 232 initiates regeneration of the GAI image.

If the number of items present in the generated GAI image satisfies the second threshold, the second validator 238 determines that the generated GAI image is valid with respect to the information received for generation of the GAI image. An exemplary illustration of validating the generated GAI image using the second validator 238 is described in detail in conjunction with FIG. 5. When the second validator 238 successfully validates the GAI image, the third validator 240 may be enabled to operate for further validation.

The third validator 240 validates the generated GAI image based on the heat map. The third validator 240 submits the generated GAI image to the heat map generator 206 and receives the heat map for the generated GAI image from the heat map generator 206. The heat map may indicate the areas/regions of the GAI image, which may be interested to the user. In some implementations, the third validator 240 evaluates the heat map to find how the heat map complies with the image layout ruleset 212 pre-defined for generation of the GAI image. The image layout ruleset 212 may refer to generical rules of image layout, for example, symmetry, proportions of objects, shapes of objects, and/or the like. The third validator 240 may use one or more of: ML models, AI models, and/or the like, for evaluating the heat map.

Further, the heat map and/or results of evaluation of the heat map are provided to the user for acceptance or rejection. If the heat map is accepted by the user, the third validator 240 determines that the GAI image is valid with respect to the information received for generation of the GAI image. If the heat map is rejected by the user, the third validator 240 determines that the generated GAI image is not valid with respect to the information received for generation of the GAI image. Thereafter, the user may be requested for entering information again for generation of the new GAI image. In some examples, new information may be inputted by the user, thereby resulting in a new text prompt. In some examples, the user may modify the previously inputted information by adding additional details. The additional details may reflect changes to be present in the new GAI image.

When the first, second, and third validators 236-240 determine that the generated GAI image is valid with respect to the information received for generation of the GAI image, the interface module 228 forwards the generated GAI image to the computing device 102/user for further use and/or further processing. The generated GAI image is an optimized, de-biased, and high-quality image. With the proposed validation, a probability of accepting the GAI image by the user is high. Therefore, resubmission of the information/text prompt for regeneration of the GAI image and review of the regenerated GAI image is reduced, which further reduces overall power consumption of the computing system 104 in generating and validating the GAI image.

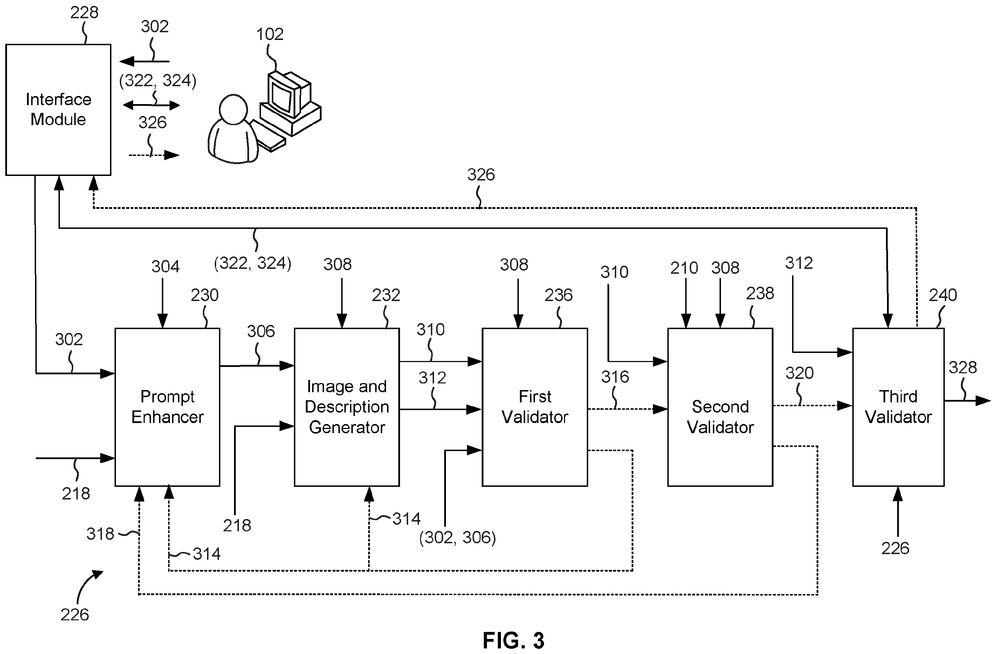

FIG. 3 is a schematic diagram of the image generation and validation engine 226 for image generation and validation in accordance with implementations of the present disclosure.

The prompt enhancer 230 receives the information/initial text prompt 302 from the computing device 102, and optionally the set of feedback parameters 218 and a first set of external parameters 304 from the datastore 208. The initial text prompt 302 may describe a context for generating the GAI image. The first set of feedback parameters 218 may indicate problems identified during validation of the previous GAI images. In some examples, the problems may be in terms of visual features of the GAI images or in terms of characteristics of the objects present in the GAI images. In some other examples, the problems may be due to biased data in the text prompt used for generation of the GAI images. In some other examples, the problems may be in terms of the areas/regions in the GAI images that the users may be interested in. The first set of external parameters 304 may be part of the set of external parameters 220 stored in the datastore 208. The set of external parameters 220 may indicate the brand ruleset, the finetuning parameters, and/or the like.

Based on the initial text prompt 302, the set of feedback parameters 218, and the first set of external parameters 304, the prompt enhancer 230 formulates a pre-prompt. The pre-prompt may indicate the additional information/list of criteria (for example, additional contextual information, visual features, or the like) to be added to the initial text prompt 302. In some examples, if the initial text prompt 302 includes the biased data, the additional information/list of criteria may indicate to remove the biased data. An example of the pre-prompt may be "you are a prompt engineer who understand prompting, here is a prompt for image generation <initial text prompt>, rewrite it incorporating the following criteria: <list of criteria/additional information>".

The prompt enhancer 230 submits the pre-prompt to an LLM (for example, GPT-4 vision) for processing and receives the enhanced text prompt 306 from the LLM, based on processing of the pre-prompt.

Consider an example scenario, wherein the initial text prompt 302 may state "a working lunch with business executives". For such an initial text prompt 302, the enhanced text prompt 306 may be provided as "A vibrant photograph featuring business executives engaged in a productive working lunch, set in a modern corporate boardroom with ample natural light, showcasing a harmonious blend of professional attire, neutral tones, an energetic atmosphere, and a balanced composition". In an example herein, the additional context like "a modern corporate boardroom with ample natural light, showcasing a harmonious blend of professional attire", and required visual features such as "neutral tones, an energetic atmosphere, and a balanced composition" are added as the additional information/list of criteria to the initial text prompt.

The prompt enhancer 230 provides the enhanced text prompt 306 to the image and description generator 232. The image and description generator 232 may also obtain the set of feedback parameters 218, and a second set of external parameters 308 from the datastore 208. The second set of external parameters 308 may be obtained from the set of external parameters 220 in the datastore 208. The second set of external parameters 308 may include the brand ruleset, the guidelines, and/or the like. The image and description generator 232 uses the GAI image generator 202 to generate the GAI image 310, based on the enhanced text prompt 306, the set of feedback parameters 218, and the second set of external parameters 308.

The image and description generator 232 also uses the GAI image description engine 204 to generate the GAI text description 312 for the generated GAI image 310. The GAI text description 312 may describe the features of the generated GAI image 310. In an example, for the generated GAI image 310 (for example, generated using the enhanced text prompt 306), the GAI text description 312 may be generated as "A photograph featuring business executives engaged in a productive working lunch".

The image and description generator 232 provides the generated GAI image 310 and the GAI text description 312 corresponding to the generated GAI image 310 to the first validator 236. The first validator 236 may also obtain the enhanced text prompt 306, the initial text prompt 302, and the second set of external parameters 308. Based on the GAI text description 312, the enhanced text prompt 306, the initial text prompt 302, and the second set of external parameters 308, the first validator 236 determines if the generated GAI image 310 is valid ("OK") or not ("KO") with respect to the initial text prompt 302.

For determining if the generated GAI image 310 is valid or not, the first validator 236 performs the semantic comparison of the GAI text description 312 and the enhanced text prompt 306. The first validator 236 further determines the score for a result of the semantic comparison. The score may be determined based on evaluation of the GAI text description 312 and the enhanced text prompt 306 in consideration with the initial text prompt 302 and the second set of external parameters 308. The first validator 236 compares the score with the first threshold 214.

If the score is within the first threshold 214, the first validator 236 determines the mismatch between the enhanced text prompt 306 and the GAI text description 312. Accordingly, the first validator 236 determines that the generated GAI image 310 is not valid ("KO") with respect to the initial text prompt 302. In such a scenario, the first validator 236 may identify the problems in the generated GAI image 310 or problems with the enhanced text prompt 306. In some examples, the problems in the generated GAI image 310 may indicate a set of criteria missing in the generated GAI image such as, the contextual information, the visual features and/or the like. The problems in the enhanced text prompt 306 may indicate precisions missing in the visual features of the generated GAI image 310 or presence of the biased data, or the like. Upon identifying the problems with the generated GAI image 310 or the enhanced text prompt 306, the first validator 236 sends the identified problems as the set of feedback parameters along with a rejection signal 314 to the GAI image generator 202 or the prompt enhancer 230 for regeneration of a new image or regeneration of a new text prompt, which is described in detail in conjunction with FIG. 4.

In an example herein, consider that the GAI text description 312 and the enhanced text prompt 306 includes "A vibrant photograph featuring business executives engaged in a productive working lunch, set in a modern corporate boardroom with ample natural light, showcasing a harmonious blend of professional attire, neutral tones, an energetic atmosphere, and a balanced composition" and "A photograph featuring business executives engaged in a productive working lunch", respectively. In such a consideration, the first validator 236 determines that the score for the semantic comparison of the GAI text description 312 and the enhanced text prompt 306 is lesser than the first threshold 214, as the criteria such as additional contextual information and the visual features included in the enhanced text prompt 306 are not present in the GAI text description 312 corresponding to the generated GAI image 310. In such a scenario, the first validator 236 provides the set of feedback parameters along with the rejection signal 314 to the image and description generator 232 for regeneration of a new GAI image. The set of feedback parameters may indicate the missing criteria in the generated GAI image 310.

If the score is greater than the first threshold 214, the first validator 236 determines that generated GAI image is valid ("OK") with respect to the initial text prompt 302. Thereafter, the first validator 236 may send an acceptance signal 316 to the second validator 238.

Upon receiving the acceptance signal 316 from the first validator 236, the second validator 238 initiates validation of the generated GAI image 310. The second validator 238 obtains the generated GAI image 310, the second set of external parameters 308, and the list of neuroaesthetics criteria 210 (indicate the items predetermined to be present in the GAI image). The second validator 238 evaluates the generated GAI image 310 and the list of neuroaesthetics criteria 210 using the GAI image description engine 204 and determines a number of items on the list of neuroaesthetics criteria present in the generated GAI image 310. The second validator 238 compares the number of items with the second threshold 216.

If the number of items does not satisfy the second threshold 216, the second validator 238 determines that the generated GAI image 310 does not include the predetermined items on the list of neuroaesthetics criteria 210. Accordingly, the second validator 238 determines the generated GAI image 310 is not valid ("KO") with respect to the initial text prompt. Upon the determination, the second validator 238 sends a rejection signal 318 to the prompt enhancer 230 for re-enhancement of the initial text prompt 302. The re-enhanced text prompt 306 is used for regeneration of the new GAI image. The rejection signal 318 includes the number of items missing in the generated GAI image as the set of feedback parameters for re-enhancement of the initial text prompt 302.

In an example herein, consider that the generated GAI image 310 is a vibrant photograph featuring businessperson engaged in a productive working lunch, set in a modern corporate boardroom with ample natural light, showcasing a harmonious blend of professional attire, neutral tones, an energetic atmosphere, and a balanced composition. In such a scenario, the second validator 238 compares the number of items on the list of neuroaesthetics criteria present in the generated image with the second threshold 216 and for example herein, identifies that number of items is less than the second threshold 216. Accordingly, the second validator 238 determines that the generated GAI image 310 is not valid with respect to the initial text prompt 302. Further, the second validator 238 identifies that the objects such as "vegetables" specified in the list of neuroaesthetics criteria 210 for the lunch are missing in the generated GAI image 310. Upon the identification, the second validator 238 sends the rejection signal 318 to the image and description generator 232 for regeneration of the new GAI image. The rejection signal 318 may indicate the objects "vegetables" to be shown in the new GAI image.

If the number of items satisfies the second threshold 216, the second validator 238 determines that generated GAI image is valid with respect to the initial text prompt 302. Further, the second validator 238 sends an acceptance signal 320 ("OK") to the second validator 238. The acceptance signal indicates the successful validation of the generated GAI image 310.

Upon receiving the acceptance signal 320, the third validator 240 initiates validation of the generated GAI image using the heat map. The third validator 240 obtains the generated GAI image 310 and submits the generated GAI image 310 to the heat map generator 206. The heat map generator 206 uses the CRISP engine to generate the heat map for the generated GAI image 310. The third validator 240 provides the heat map 322 to the computing device 102 through the interface module 228 for acceptance or rejection by the user. In response to providing the heat map, the third validator 240 receives a response 324 from the computing device 102 through the interface module 228. The response 324 indicates either acceptance or rejection of the heat map by the user.

If the heat map is rejected, the third validator 240 sends an indication 326 to the computing device 102 through the interface module 228, which allows the user to enter a new initial text prompt/information. The new initial text prompt may include new information for generation of the new GAI image or modification of the initial text prompt/information 302 originally provided for generation of the new GAI image.

If the heat map is accepted, the third validator 240 determines that the generated GAI image is valid and sends an indication 328 to the interface module 228 to provide the generated GAI image to the computing device 102 for further use/processing.

Therefore, with the proposed validation/assessment of the GAI image, the user may launch the image generation application, provide the initial text prompt to the image generation application, and obtain the GAI image without any further intervention. Thereby, "launch and forget" optimization process may be followed for generation of the GAI image. Further, multiple GAI images are generated in parallel without any time consumption/delay.

FIG. 4 is a block diagram that presents an example of the first validator 236 for validating the GAI image based on the text prompt matching in accordance with implementations of the present disclosure. The first validator 236 includes an embedding module 402, a similarity calculation module 404, and a comparison module 406.

The embedding module 402 receives the GAI text description 312 corresponding to the generated GAI image 310 and the enhanced text prompt 306 used for generation of the GAI image. The embedding module 402 converts the GAI text description 312 into a description vector 410. Similarly, the embedding module 402 converts the enhanced text prompt 306 into a prompt vector 408. The GAI text description 312 and the enhanced text prompt 306 may be converted into the description vector 410 and the prompt vector 408, respectively, by way of non-limiting examples, using SIAMESE-BERT networks, global vector representations, as known in the art and not further discussed herein. The description vector 410 and the prompt vector 408 may be provided to the similarity calculation module 404.

The similarity calculation module 404 calculates the score 412 between the description vector 410 and the prompt vector 408, by way of non-limiting example, using a cosine similarity method and not further discussed herein. If the score 412 is high, then the GAI text description 312 and the enhanced text prompt 306 are identical with each other in semantic manner. Thereby, the mismatch between the GAI text description 312 and the enhanced text prompt 306 may be low. In some examples, the score 412 may be in terms of percentile.

The comparison module 406 compares the score 412 with the first threshold 214. As a non-limiting example, the first threshold 214 may be 90%. If the score is equal to or greater than the first threshold 214, the comparison module 406 determines that the generated GAI image is valid with respect to the initial text prompt 302. Once the generated GAI image is successfully validated, the second validator 238 initiates the validation of the generated GAI image based on the list of neuroaesthetics criteria.

If the score 412 is below the first threshold 214 within a small range as defined by the first predetermined variance (for example, if the score is slightly under the first threshold), the comparison module 406 determines that the generated GAI image 310 is closer to the initial text prompt 302, however, indicating symptomatic of a failure in generation of the GAI image. As a non-limiting example, the first variance may be 10% (for example, 80%-90% are within the first threshold 214). The failure in the generation of the GAI image may be due to randomness in generation of the GAI image, or one or more criteria (described in the initial text prompt/enhanced text prompt) missing in the generated GAI image 310, or quality of the generated GAI image 310, or the like. Therefore, the generated GAI image 310 is considered not valid with respect to the initial text prompt 302. Further, regeneration of a new GAI image is initiated without requiring any enhanced text prompt or user intervention.

If the score 412 is below the first threshold 214 within a larger range as defined by the second predetermined variance (for example, if the score is under the first threshold), the comparison module 406 determines that the generated GAI image 310 is not valid with respect to the initial text prompt 302 due to the corresponding enhanced text prompt 306. Consequently, the specified problems within the generated GAI image may be identified and used for enhancing and setting of the initial text prompt 302 into the enhanced text prompt 306, without requiring any user intervention. The enhanced text prompt 306 may be used for regeneration of a new GAI image.

Consider an example scenario, wherein the enhanced text prompt 306 corresponding to the initial text prompt 302 and used for generation of the GAI image includes "generate a soft, hairy, round ball, with pink color" and the GAI text description 312 corresponding to the generated GAI image 310 includes "the image shows a fluffy ball with smooth textures, with appealing colors". In such a scenario, the score indicating the similarity between the enhanced text prompt 306 and the GAI text description 312 is generated as 90%, which is equal to the first threshold 214. Therefore, the generated GAI image is considered as valid with respect to the initial text prompt 302.

Consider another example scenario, wherein the enhanced text prompt 306 corresponding to the initial text prompt 302 and used for generation of the GAI image includes "generate a soft, hairy, round ball, with pink color" and the GAI text description 312 corresponding to the generated GAI image 310 includes "the image shows a cat eating an apple". In such a scenario, the score indicating the similarity between the enhanced text prompt 306 and the GAI text description 312 is generated as 19%, which is below the first threshold 214 by the larger range defined by the second predetermined threshold. Therefore, the generated GAI image 310 is considered as not valid with respect to the initial text prompt 302. Subsequently, enhancing and setting of the initial text prompt 302 into the enhanced text prompt 306 is regenerated by targeting a correct component for regeneration of the GAI image.

FIG. 5 is a block diagram that presents an example of the second validator 238 for validating the GAI image based on the list of neuroaesthetics criteria 210 in accordance with implementations of the present disclosure. The second validator 238 includes an item detection module 502, a score calculation module 504, and a comparison module 506.

The item detection module 502 receives the list of neuroaesthetics criteria 210 and the generated GAI image 310 for the validation. The list of neuroaesthetics criteria 210 may specify a total number of items (in terms of color, objects, shapes, textures, or the like) to be present in the generated GAI image. The item detection module 502 submits the list of neuroaesthetics criteria and the generated GAI image 310 to the GAI image description engine 204 and receives a number of items 508 on the list of neuroaesthetics criteria present in the generated GAI image 310.

Once the number of items present in the generated GAI image 310 are identified, the score calculation module 504 computes a neuroaesthetics score 510 over 100, based on the number of items present in the generated GAI image 310 and the total number of items to be present in the generated GAI image 310.

The comparison module 506 compares the neuroaesthetics score 510 with the second threshold 216. If the neuroaesthetics score 510 is equal to or greater than the second threshold 216, the comparison module 506 determines that the generated GAI image 310 is valid (512) with respect to the initial text prompt 302. Once the generated GAI image 310 is determined as valid 512, a next stage of validation is initiated by the third validator 240.

If the neuroaesthetics score 510 is lesser than the second threshold 216, the comparison module 506 determines that the generated GAI image 310 is not valid 514 with respect to the initial text prompt 302. Once the generated GAI image 310 is determined as not valid 514, enhancing and setting of the initial text prompt 302 into the enhanced text prompt 306 is reinitiated by considering the initial text prompt 302 and the number of items on the list of neuroaesthetics criteria 210 missing in the generated GAI image 310. The enhanced text prompt may be further used for regeneration of a new GAI image. Therefore, the new GAI image is regenerated without requiring any user intervention.

Consider an example scenario, wherein the generated GAI image 310 shows a fluffy round ball with smooth texture, with appealing colors and the list of neuroaesthetics criteria 210 specifies that "colors are pale", "objects are round", and "smooth texture". In such a scenario, the neuroaesthetics score 510 of the generated GAI image is computed as 90%, as the generated GAI image 310 does not include pale colors as specified by the list of neuroaesthetics criteria 210. Further, as the neuroaesthetics score 510 is greater than the second threshold 216 (for example, 80%), the generated GAI image 310 is determined as valid with respect to the initial text prompt 302.

Consider another example scenario, wherein the generated GAI image 310 shows a war scene with explicit violence. In such a scenario, the neuroaesthetics score 510 of the generated GAI image 310 is computed as 21%, as the list of neuroaesthetics criteria does not specify for any explicit violence. Further, as the neuroaesthetics score 510 is lesser than the second threshold 216 (for example, 80%), the generated GAI image 310 is determined as not valid with respect to the initial text prompt.

FIG. 6 is a block diagram that presents an example of the third validator 240 for validating the GAI image based on the heat map in accordance with implementations of the present disclosure. The third validator 240 includes a map generation module 602, and a validation module 604.

The map generation module 602 receives the generated GAI image 310. The map generation module 602 submits the generated GAI image 310 to the heat map generator 206 and receives the heat map 606 from the heat map generator 206. In some examples, the map generation module 602 may also receive heat map information from the heat map generator 206. The heat map information may be derived by performing analysis on the heat map 606 to identify how the heap map complies with the image layout ruleset 212 (for example, symmetry, proportion of objects, or the like).

The validation module 604 enables validation of the heat map 606 and/or the heat map information by the user. If the user validates and accepts the heat map 606 and/or the heat map information, the validation module 604 determines that the generated GAI image 310 is valid 608 with respect to the initial text prompt 302. In such a scenario, the generated GAI image 310 is provided to the computing device 102/user for further processing or use.

If the user rejects the heat map 606 and/or the heat map information, the validation module 604 determines that the generated GAI image 310 is not valid 610 with respect to the initial text prompt 302. In such a scenario, the user is allowed to re-enter a new initial text prompt/information for generation of a new GAI image.

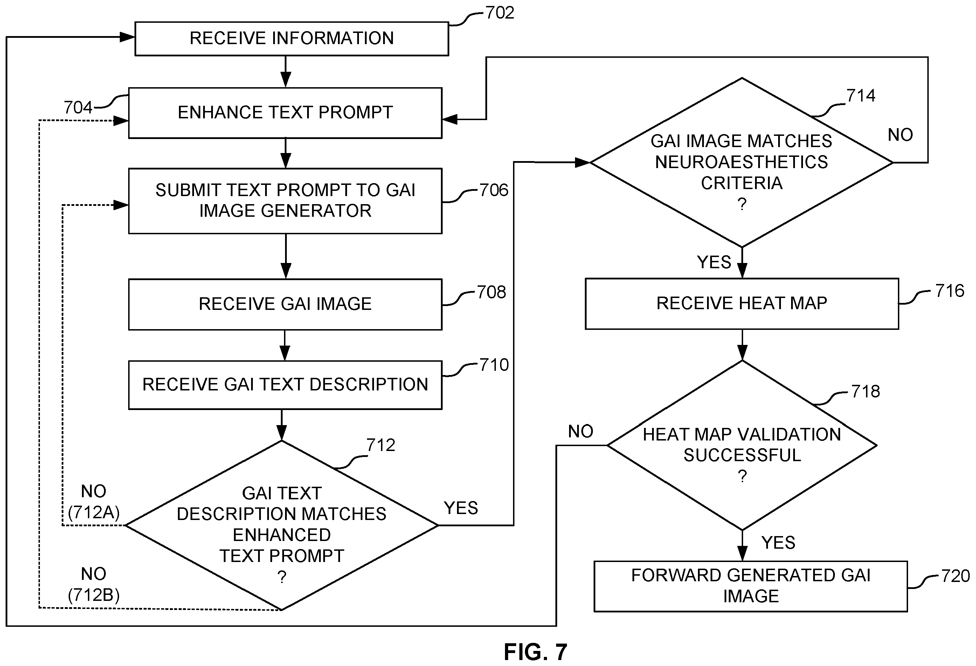

FIG. 7 is a flow diagram that presents an example computer-implemented method 700 for generation and validation of GAI images, in accordance with implementations of the present disclosure. In some implementations, the method 700 may be executed by the processor 222 of the computing system 104, as described in relation to FIGS 2-6.

At step 702, the method 700 includes first receiving the information/initial text prompt describing the features of the desired image. In some examples, the features may indicate objects to be present in the desired image, context related to the objects, the visual features of the desired image, and/or the like.

At step 704, the method 700 includes enhancing the received information into the text prompt. The received information may be enhanced into the text prompt using any of the foundation models/LLMs, AImodels, ML models, and/or the like. In some examples, the received information may be enhanced into the text prompt by adding the additional information/criteria to the received information and/or considering the set of feedback parameters 218 (collected from the generation of previous GAI images). The additional information may include additional contextual information incorporating demographics/industry-based considerations, GAI based specific keywords, and/or the like, required visual features, unbiased data to be replaced with the biased data (if any in the initial text prompt), and/or the like. The set of feedback parameters 218 may indicate the problems identified with in the previously generated GAI images. The problems may be identified due to missing criteria/contextual information in the GAI images, inappropriate visual features of the GAI image, missing items on the list of neuroaesthetics criteria in the GAI images and/or the like.

At step 706, the method 700 includes first submitting the enhanced text prompt to the GAI image generator 202. In some examples, the set of feedback parameters 218 and the set of external parameters 220 may be submitted along with the enhanced text prompt to the GAI image generator 202. The set of external parameters 220 may include the brand ruleset, the finetuning parameters, and/or the like. In response to the first submission, at step 708, the method 700 includes second receiving, from the GAI image generator 202, the generated GAI image corresponding to the enhanced text prompt.

At step 710, the method 700 includes third receiving the GAI image description of the generated GAI image from the GAI image description engine 204. The GAI image description may be generated by the GAI image description engine 204 using the foundation models/LLMs, the computer-vision models, and/or the like. In some examples, the enhanced text prompt and optionally the set of feedback parameters 218 and set of external parameters 220 may be submitted to the GAI image description engine 204 for the GAI image description corresponding to the generated GAI image. The set of external parameters 220 may include the brand ruleset, the guidelines, and/or the like.

At step 712, the method 700 includes first determining if the GAI text description sufficiently matches the enhanced text prompt relative to the first predetermined threshold 214. The first determining includes performing the semantic comparison of the GAI text description and the enhanced text prompt and generating a score for a result of the performing the semantic comparison. The score is evaluated relative to the first threshold 214.

When the score is determined to be within the first predetermined variance from the first threshold 214, the first determining includes finding the mismatch (a first type of mismatch 712a) within the first predetermined variance. Upon finding such a mismatch 712a, the method 700 includes returning to the step 706 of first submitting the enhanced text prompt to the GAI image generator 202 for regeneration of a new GAI image.

When the score is determined to be within the second predetermined variance (greater than the first predetermined variance) from the first threshold 214, the first determining includes finding the mismatch (a second type of mismatch 712b) within the second predetermined variance. Upon finding such a mismatch 712b, the method 700 includes returning to the step 704 of enhancing and setting the information based on the enhanced text prompt and the problems identified with the generated GAI image.

In response to the first determining finding the score is above or equal to the first threshold 214, step 714 is performed. At step 714, the method 700 includes second determining if the generated GAI image sufficiently matches the list of predetermined neuroaesthetics criteria 210 relative to the second threshold 216. The second determining includes querying the GAI image description engine 204 to identify the number of items on the list of neuroaesthetics criteria 210 present in the generated GAI image. From the response to the query, the second determining includes whether the number of items present in the generated GAI image satisfy the second threshold 216.

If the number of items present in the generated GAI image does not satisfy the second threshold 216, the second determining includes determining that the generated GAI image does not include enough of the items from the list of neuroaesthetics criteria 210 and accordingly finding the mismatch below the second threshold 216. In response to the second determining finding the mismatch below the second threshold 216, the method 700 includes returning to the step 704 of enhancing and setting the information based on the enhanced text prompt and the items from the list of neuroaesthetics criteria not found in the generated GAI image.

In response to the second determining finding the match above or equal to the second threshold 216, step 716 is performed. At step 716, the method 700 includes fourth receiving the heat map of the generated GAI image. The heat map may be generated using the CRISP engine.

At step 718, the method includes 700 enabling validation of the heat map. The heat map is provided to the user for acceptance or rejection. In response to rejection of the heat map, the method 700 includes returning to the step 702 of first receiving for further information. In some examples, the information may include new information for generation of the new GAI image. In some other examples, the information may include modification of the original information for generation of the new GAI image.

In response to at least a combination of the first determining finding the GAI text description sufficiently matches the enhanced text prompt, the second determining finding the generated GAI image sufficiently matches the list of neuroaesthetics criteria 210, and acceptance of the generated heat map, at step 720, the method 700 includes forwarding the generated GAI image for further use and/or further processing. The forwarded GAI image adheres to the guidelines and the predetermined thresholds.

Implementations of the present disclosure provide technical solutions to multiple technical problems that arise in the context of traditional methods for generating and validating/assessing the GAI images. With the proposed methodology, acceptable GAI images are obtained with less resubmission and review loops. Therefore, overall power consumption required to generate the acceptable GAI images is reduced.

Further, with the proposed validation (based on the use of text description/prompt matching (first determining) and the list of neuroaesthetics criteria (second determining)) allows for computer processing as substitute for human subjective preferences. Therefore, a distinct computerized process is performed to at least partially automate validation of the generated GAI images, which were previously performed manually via continual resubmission and review loops. With such a process, a number of user interventions required till the acceptance of the generated GAI images is reduced and thereby, time consumption for generation of the acceptable GAI images is reduced.

In addition, the proposed validation of the generated GAI images based on the heat map provides a more detailed form of information to the user for evaluating the GAI image and providing feedback that is specific to altering the heat map rather than the GAI image itself.

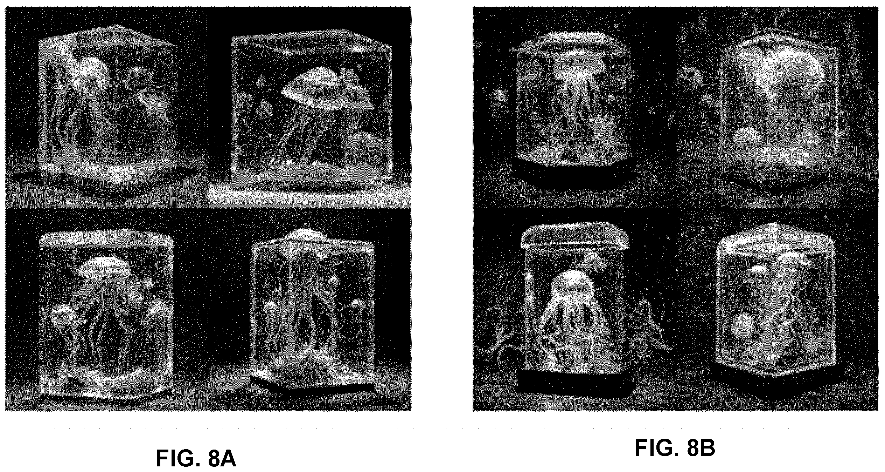

FIGS. 8A-8B, 9A-9B, 10A-10B, and 11A-11B depict generation of the acceptable GAI images in accordance with implementations of the present disclosure.

Consider an example scenario, as depicted in FIG. 8A, wherein an initial text prompt "sci -fi cosmic diorama of a quasar and jellyfish in a resin cube" is received for generation of a GAI image. However, a probability of accepting the GAI image generating using the initial text prompt is very low. Therefore, the proposed methodology enhances the initial text prompt by adding additional criteria including additional contextual information, a type of image, and visual features. For example, the enhanced text prompt incudes "a visually stunning sci -fi artwork using mixed media, such as acrylic paint and digital manipulation, to craft a cosmic diorama featuring a vibrant quasar and ethereal jellyfish suspended within a resin cube. Set the scene in a futuristic space station, surrounded by an awe-inspiring nebula, with flickering neon lights casting a mesmerizing glow. Utilize a combination of electric blues, intense purples, and neon greens to create a vivid and otherworldly color palette. Infuse the artwork with a sense of wonder and mystery, evoking a mood of both excitement and intrigue. Arrange the composition to highlight the intricate details of the quasar's energized rays intertwining with the graceful tendrils of the mystical jellyfish, capturing the viewer's imagination". With such an enhanced text prompt, the GAI image that may be acceptable by the user is generated, as depicted in FIG. 8B.

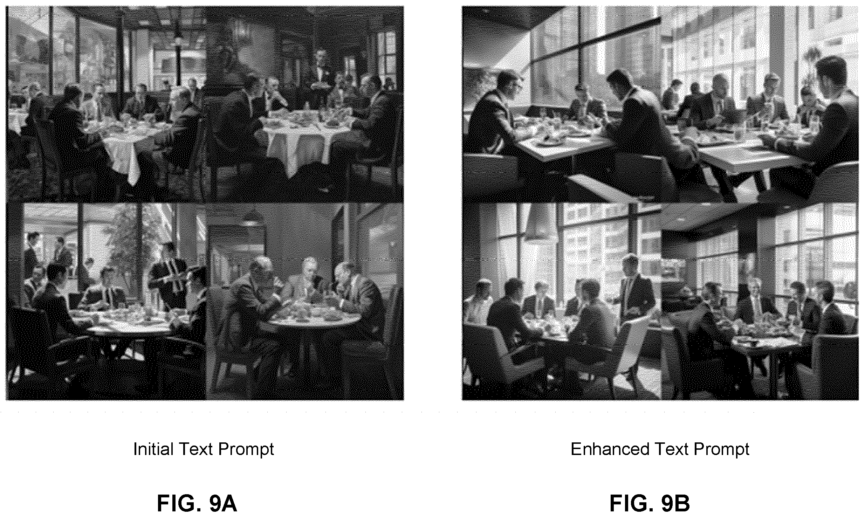

Consider another example scenario, as depicted in FIG. 9A, wherein an initial text prompt "a working lunch with business executives" is received for generation of a GAI image. However, a probability of accepting the GAI image generating using the initial text prompt is very low. Therefore, the proposed methodology enhances the initial text prompt by adding additional criteria including additional contextual information and visual features. For example, the enhanced text prompt incudes "A vibrant photograph featuring business executives engaged in a productive working lunch, set in a modern corporate boardroom with ample natural light, showcasing a harmonious blend of professional attire, neutral tones, an energetic atmosphere, and a balanced composition". With such an enhanced text prompt, the GAI image that may be acceptable by the user is generated, as depicted in FIG. 9B.

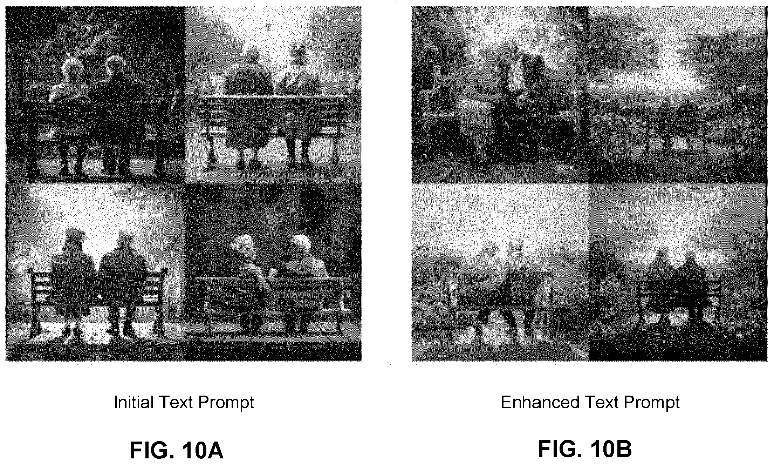

Consider yet another example scenario, as depicted in FIG. 10A, wherein an initial text prompt "two elderly people holding hands on a bench" is received for generation of a GAI image. However, a probability of accepting the GAI image generating using the initial text prompt is very low. Therefore, the proposed methodology enhances the initial text prompt by removing the biased data "elderly people" and adding additional criteria including additional contextual information, a type of image, and visual features. For example, the enhanced text prompt incudes "A serene oil painting depicting two companions of a different age group holding hands, sitting on a weathered wooden bench amidst a blooming garden in the soft glow of a golden sunset". With such an enhanced text prompt, the GAI image that may be acceptable by the user is generated, as depicted in FIG. 10B.

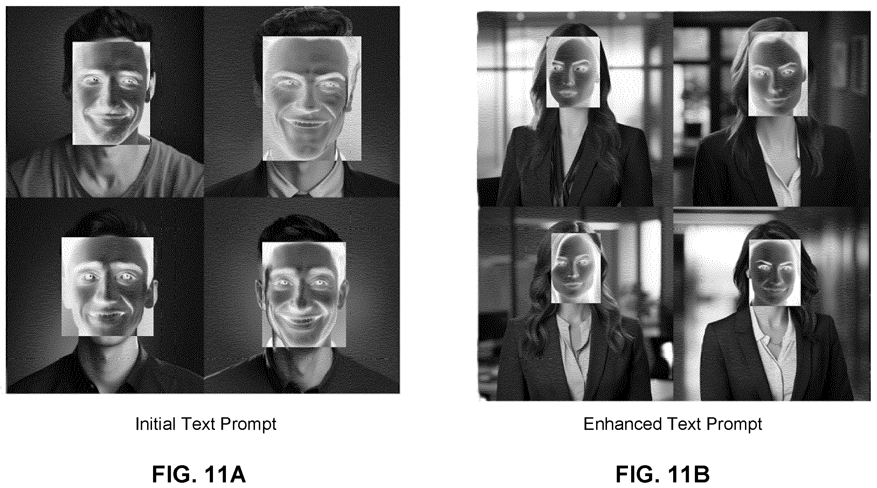

Consider yet another example scenario, as depicted in FIG. 11A, wherein an initial text prompt "Hyper realistic headshot photo of a man looking into the camera smiling slightly, calm features, looks like an advertising executive" is received for generation of a GAI image. However, a probability of accepting the GAI image generating using the initial text prompt is very low. Therefore, the proposed methodology enhances the initial text prompt by removing the biased data "man" and adding additional criteria including additional contextual information, a type of image, and visual features. For example, the enhanced text prompt incudes "Create a hyper-realistic, headshot photograph of a calm advertising executive in a modern office setting with natural lighting, showcasing slight smiles, warm colors, a composed mood, and strong central composition". With such an enhanced text prompt, the GAI image that may be acceptable by the user is generated, as depicted in FIG. 11B.

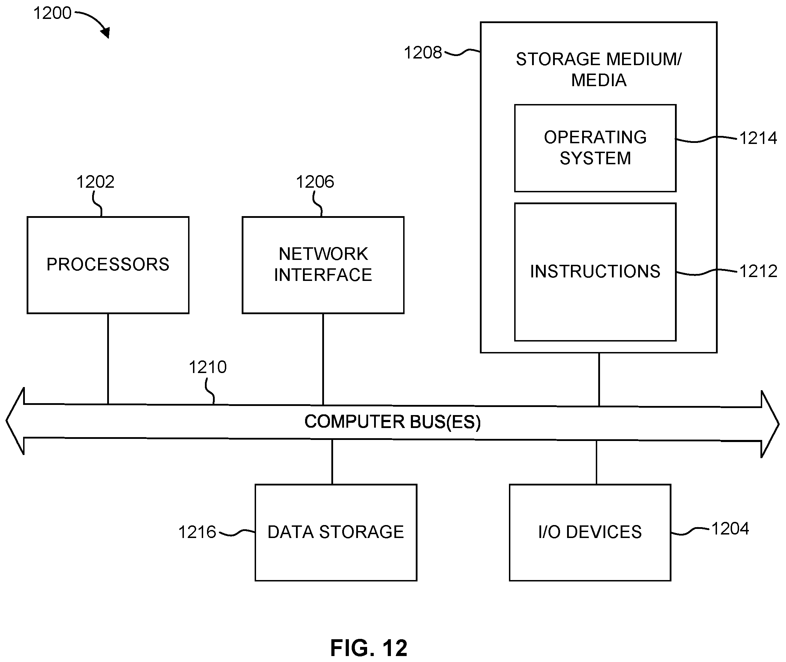

FIG. 12 illustrates a computer system 1200 that may be used to implement the method 700 as described in relation with FIG. 7. More particularly, computing machines such as desktops, laptops, smartphones, tablets, and wearables which may be used to generation and validation of the GAI images and that may have the structure of the computer system 1200. The computer system 1200 may include additional components not shown and that some of the process components described may be removed and/or modified. In another example, the computer system 1200 may be deployed on external-cloud platforms such as cloud, internal corporate cloud computing clusters, organizational computing resources, and/or the like.

The computer system 1200 includes processor(s) 1202, such as a central processing unit, ASIC or another type of processing circuit, input/output devices 1204, such as a display, mouse keyboard, etc., a network interface 1206, such as a Local Area Network (LAN), a wireless 802.11x LAN, a 3G or 4G mobile WAN or a WiMax WAN, and a computer-readable medium 1208. Each of these components may be operatively coupled to a bus 1210. The computer-readable medium 1208 may be any suitable medium that participates in providing instructions programmed to cooperate with the processor(s) 1202 to perform the computer-implemented method 700. For example, the computer-readable medium 1208 may be non-transitory or non-volatile medium, such as a magnetic disk or solid-state non-volatile memory or volatile medium such as RAM. The instructions or modules stored on the computer-readable medium 1208 may include machine-readable instructions 1212 executed by the processor(s) 1202 that cause the processor(s) 1202 to perform the method 700 and functions of the computing system 104.

The method 700 may be implemented as software stored on a non-transitory processor-readable medium and executed by the processors 1202. For example, the computer-readable medium 1208 may store an operating system 1214, such as MAC OS, MS WINDOWS, UNIX, or LINUX, and code for implementation of the method 700. The operating system 1214 may be multiuser, multiprocessing, multitasking, multithreading, real-time, and the like. For example, during runtime, the operating system 1214 is running and the code for implementation of the method 700 is executed by the processor(s) 1202.

The computer system 1200 may include a data storage 1216, which may include non-volatile data storage. The data storage 1216 stores any data used or generated by the method 700.

The network interface 1206 connects the computer system 1200 to internal systems for example, via a LAN. Also, the network interface 1206 may connect the computer system 1200 to the Internet. For example, the computer system 1200 may connect to web browsers and other external applications and systems via the network interface 1206.

Implementations and all of the functional operations described in this specification may be realized in digital electronic circuitry, or in computer software, firmware, or hardware, including the structures disclosed in this specification and their structural equivalents, or in combinations of one or more of them. Implementations may be realized as one or more computer program products (i.e., one or more modules of computer program instructions encoded on a computer readable medium for execution by, or to control the operation of, data processing apparatus). The computer readable medium may be a machine-readable storage device, a machine-readable storage substrate, a memory device, a composition of matter effecting a machine-readable propagated signal, or a combination of one or more of them. The term computing system encompasses all apparatus, devices, and machines for processing data, including by way of example a programmable processor, a computer, or multiple processors or computers. The apparatus may include, in addition to hardware, code that creates an execution environment for the computer program in question (e.g., code that constitutes processor firmware, a protocol stack, a database management system, an operating system, or any appropriate combination of one or more thereof). A propagated signal is an artificially generated signal (e.g., a machine-generated electrical, optical, or electromagnetic signal) that is generated to encode information for transmission to suitable receiver apparatus.

A computer program (also known as a program, software, software application, script, or code) may be written in any appropriate form of programming language, including compiled or interpreted languages, and it may be deployed in any appropriate form, including as a stand-alone program or as a module, component, subroutine, or other unit suitable for use in a computing environment. A computer program does not necessarily correspond to a file in a file system. A program may be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program may be deployed to be executed on one computer or on multiple computers that are located at one site or distributed across multiple sites and interconnected by a communication network.

The processes and logic flows described in this specification may be performed by one or more programmable processors executing one or more computer programs to perform functions by operating on input data and generating output. The processes and logic flows may also be performed by, and apparatus may also be implemented as, special purpose logic circuitry (e.g., an FPGA (field programmable gate array) or an ASIC (application specific integrated circuit)).

Processors suitable for the execution of a computer program include, by way of example, both general and special purpose microprocessors, and any one or more processors of any appropriate kind of digital computer. Generally, a processor will receive instructions and data from a read only memory or a random access memory or both. Elements of a computer can include a processor for performing instructions and one or more memory devices for storing instructions and data. Generally, a computer will also include, or be operatively coupled to receive data from or transfer data to, or both, one or more mass storage devices for storing data (e.g., magnetic, magneto optical disks, or optical disks). However, a computer need not have such devices. Moreover, a computer may be embedded in another device (e.g., a mobile telephone, a personal digital assistant (PDA), a mobile audio player, a Global Positioning System (GPS) receiver). Computer readable media suitable for storing computer program instructions and data include all forms of non-volatile memory, media and memory devices, including by way of example semiconductor memory devices (e.g., EPROM, EEPROM, and flash memory devices); magnetic disks (e.g., internal hard disks or removable disks); magneto optical disks; and CD ROM and DVD-ROM disks. The processor and the memory may be supplemented by, or incorporated in, special purpose logic circuitry.

To provide for interaction with a user, implementations may be realized on a computer having a display device (e.g., a CRT (cathode ray tube), LCD (liquid crystal display) monitor) for displaying information to the user and a keyboard and a pointing device (e.g., a mouse, a trackball, a touch-pad), by which the user may provide input to the computer. Other kinds of devices may be used to provide for interaction with a user as well; for example, feedback provided to the user may be any appropriate form of sensory feedback (e.g., visual feedback, auditory feedback, tactile feedback); and input from the user may be received in any appropriate form, including acoustic, speech, or tactile input.

Implementations may be realized in a computing system that includes a back end component (e.g., as a data server), a middleware component (e.g., an application server), and/or a front end component (e.g., a client computer having a graphical user interface or a Web browser, through which a user may interact with an implementation), or any appropriate combination of one or more such back end, middleware, or front end components. The components of the system may be interconnected by any appropriate form or medium of digital data communication (e.g., a communication network). Examples of communication networks include a local area network (LAN) and a wide area network (WAN), e.g., the Internet.

The computing system may include clients and servers. A client and server are generally remote from each other and typically interact through a communication network. The relationship of client and server arises by virtue of computer programs running on the respective computers and having a client-server relationship to each other.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the implementations described above should not be understood as requiring such separation in all implementations, and it should be understood that the described program components and systems may generally be integrated together in a single software product or packaged into multiple software products.

## Claims

1. A computer-implemented method, comprising:
first receiving information describing features of a desired image;
enhancing the received information into a text prompt;
first submitting, to a Generative Artificial Intelligence (GAI) image generator (202), the enhanced text prompt;
second receiving, from the GAI image generator (202), a generated GAI image corresponding to the enhanced text prompt;
third receiving, from a GAI image description engine (204), a GAI text description of the generated GAI image;
first determining if the GAI text description sufficiently matches the enhanced text prompt relative to a first predetermined threshold (214);
in response to the first determining finding a mismatch (712a) within a first predetermined variance from the first predetermined threshold (214), returning to the first submitting;
in response to the first determining finding a mismatch (712b) within a second predetermined variance from the first predetermined threshold (214), returning to the enhancing and setting the information based on the enhanced text prompt and identified problems associated with one or more objects that are missing within the generated GAI image, wherein the second predetermined variance is greater than the first predetermined variance;
second determining if the generated GAI image sufficiently matches a list of predetermined neuroaesthetics criteria (210) relative to a second predetermined threshold (216);
in response to the second determining finding a mismatch below the second predetermined threshold (216), returning to the enhancing and setting the information based on the enhanced text prompt and items from the list of predetermined neuroaesthetics criteria (210) not found in the generated GAI image;
fourth receiving a heat map of the generated GAI image;
providing the heat map to the user for acceptance or rejection;
in response to rejection of the heat map, returning to the first receiving for further information; and
forwarding the generated GAI image for further use and/or further processing in response to at least a combination of the first determining finding the GAI text description sufficiently matches the enhanced text prompt, the second determining finding the generated GAI image sufficiently matches the list of predetermined neuroaesthetics criteria (210), and acceptance of the generated heat map.

2. The method of claim 1, wherein the first determining comprises:
performing a semantic comparison of the GAI text description and the enhanced text prompt;
scoring a result of the performing to generate a score; and
evaluating the score relative to the first predetermined threshold (214).

3. The method of claim 2, wherein in response to the first determining finding the mismatch within the first predetermined variance further comprises:
determining the score is within the first variance from the first predetermined threshold (214).

4. The method of claim 2, wherein in response to the first determining finding the mismatch within the second predetermined variance further comprises:
determining the score is beyond the first variance from the first predetermined threshold (214).

5. The method of claim 1 or 2, wherein the second determining if the GAI image sufficiently matches the list of predetermined neuroaesthetics criteria (210) further comprises:
querying the GAI image description engine (204) to identify a number of items on the list are present in the generated GAI image; and
determining, from a response to the query, whether the number of items present in the generated GAI image satisfy the second predetermined threshold (216),
wherein optionally in response to the second determining finding the mismatch below the second predetermined threshold (216) further comprises:
determining that the generated GAI image does not include enough of the items from the list.

6. The method of any one of claims 1, 2 or 5, wherein the fourth receiving the heat map comprises processing the generated GAI image with a CRISP engine.

7. A system, comprising:
a memory storing instructions; and
a processor programmed to cooperate with the instructions to perform operations comprising:
first receiving information describing features of a desired image;
enhancing the received information into a text prompt;
first submitting, to a Generative Artificial Intelligence (GAI) image generator (202), the enhanced text prompt;
second receiving, from the GAI image generator (202), a generated GAI image corresponding to the text prompt.
third receiving, from a GAI image description engine (204), a GAI text description of the generated GAI image;
first determining if the GAI text description sufficiently matches the enhanced text prompt relative to a first predetermined threshold (214);
in response to the first determining finding a mismatch (712a) within a first predetermined variance from the first predetermined threshold (214), returning to the first submitting;
in response to the first determining finding a mismatch (712b) within a second predetermined variance from the first predetermined threshold (214), returning to the enhancing and setting the information based on the enhanced text prompt and identified problems associated with one or more objects that are missing within the generated GAI image,
wherein the second predetermined variance is greater than the first predetermined variance;
second determining if the generated GAI image sufficiently matches a list of predetermined neuroaesthetics criteria (210) relative to a second predetermined threshold (216);
in response to the second determining finding a mismatch below the second predetermined threshold (216), returning to the enhancing and setting the information based on the enhanced text prompt and items from the list of predetermined neuroaesthetics criteria (210) not found in the generated GAI image;
fourth receiving a heat map of the generated GAI image;
providing the heat map to the user for acceptance or rejection;
in response to rejection of the heat map, returning to the first receiving for further information; and
forwarding the generated GAI image for further use and/or further processing in response to at least a combination of the first determining finding the GAI text description sufficiently matches the enhanced text prompt, the second determining finding the generated GAI image sufficiently matches the list of predetermined neuroaesthetics criteria (210), and acceptance of the generated heat map.

8. The system of claim 7, wherein the first determining comprises:
performing a semantic comparison of the GAI text description and the enhanced text prompt;
scoring a result of the performing to generate a score; and
evaluating the score relative to the first predetermined threshold (214).

9. The system of claim 8, wherein in response to the first determining finding the mismatch (712a) within the first predetermined variance further comprises:
determining the score is within the first variance from the first predetermined threshold (214).

10. The system of claim 8, wherein in response to the first determining finding the mismatch (712b) within the second predetermined variance further comprises:
determining the score is beyond the first variance from the first predetermined threshold (214).

11. The system of claim 7 or 8, wherein the second determining if the GAI image sufficiently matches the list of predetermined neuroaesthetics criteria (210) further comprises:
querying the GAI image description engine (204) to identify a number of items on the list are present in the generated GAI image; and
determining, from a response to the query, whether the number of items present in the generated GAI image satisfy the second predetermined threshold (216),
wherein optionally the in response to the second determining finding the mismatch below the second predetermined threshold (216) further comprises:
determining that the generated GAI image does not include enough of the items from the list.

12. The system of any one of claims 7, 8 or 11, wherein the fourth receiving the heat map comprises processing the generated GAI image with a CRISP engine.

13. A non-transitory computer readable media storing instructions which, when executed by computer hardware in combination with software, perform operations, comprising:
first receiving information describing features of a desired image;
enhancing the received information into a text prompt;
first submitting, to a Generative Artificial Intelligence (GAI) image generator (202), the text prompt;
second receiving, from the GAI image generator (202), a generated GAI image corresponding to the text prompt.
third receiving, from a GAI image description engine (204), a GAI text description of the generated GAI image;
first determining if the GAI text description sufficiently matches the enhanced text prompt relative to a first predetermined threshold (214);
in response to the first determining finding a mismatch (712a) within a first predetermined variance from the first predetermined threshold (214), returning to the first submitting;
in response to the first determining finding a mismatch (712b) within a second predetermined variance from the first predetermined threshold (214), returning to the enhancing and setting the information based on the enhanced text prompt and identified problems associated with one or more objects that are missing within the generated GAI image, wherein the second predetermined variance is greater than the first predetermined variance;
second determining if the generated GAI image sufficiently matches a list of predetermined neuroaesthetics criteria (210) relative to a second predetermined threshold (216);
in response to the second determining finding a mismatch below the second predetermined threshold (216), returning to the enhancing and setting the information based on the enhanced text prompt and items from the list of predetermined neuroaesthetics criteria (210) not found in the generated GAI image;
fourth receiving a heat map of the generated GAI image;
providing the heat map to the user for acceptance or rejection;
in response to rejection of the heat map, returning to the first receiving for further information; and
forwarding the generated GAI image for further use and/or further processing in response to at least a combination of the first determining finding the GAI text description sufficiently matches the enhanced text prompt, the second determining finding the generated GAI image sufficiently matches the list of predetermined neuroaesthetics criteria (210), and acceptance of the generated heat map.

14. The non-transitory computer readable media of claim 13, wherein the first determining comprises:
performing a semantic comparison of the GAI text description and the enhanced text prompt;
scoring a result of the performing to generate a score; and
evaluating the score relative to the first predetermined threshold (214),
wherein optionally in response to the first determining finding a mismatch within the first predetermined variance further comprises:
determining the score is within the first variance from the first predetermined threshold (214), or determining the score is beyond the first variance from the first predetermined threshold (214).

15. The non-transitory computer readable media of claim 13 or 14, wherein the second determining if the GAI image sufficiently matches the list of predetermined neuroaesthetics criteria (210) further comprises:
querying the GAI image description engine (204) to identify a number of items on the list are present in the generated GAI image; and
determining, from a response to the query, whether the number of items present in the generated GAI image satisfy the second predetermined threshold (216),
wherein optionally in response to the second determining finding a mismatch below the second predetermined threshold (216) further comprises:
determining that the generated GAI image does not include enough of the items from the list.

## Patentansprüche

1. Ein computerimplementiertes Verfahren, umfassend:
erstes Empfangen von Informationen, die Merkmale eines gewünschten Bildes beschreiben;
Aufbereiten der empfangenen Informationen zu einem Text-Prompt;
erstes Übermitteln des aufbereiteten Text-Prompts an einen Bildgenerator (202) auf Basis generativer künstlicher Intelligenz (GAI);
zweites Empfangen, von dem GAI-Bildgenerator (202), eines generierten GAI-Bildes, das dem aufbereiteten Text-Prompt entspricht;
drittes Empfangen, von einem GAI-Bildbeschreibungsmotor (204), einer GAI-Textbeschreibung des generierten GAI-Bildes;
erstes Bestimmen, ob die GAI-Textbeschreibung dem aufbereiteten Text-Prompt in Bezug auf einen ersten vorbestimmten Schwellenwert (214) ausreichend entspricht;
als Reaktion auf das erste Bestimmen, dass eine Nichtentsprechung (712a) innerhalb einer ersten vorbestimmten Varianz vom ersten vorbestimmten Schwellenwert (214) vorliegt, Zurückkehren zum ersten Übermitteln;
als Reaktion auf das erste Bestimmen, dass eine Nichtentsprechung (712b) innerhalb einer zweiten vorbestimmten Varianz vom ersten vorbestimmten Schwellenwert (214) vorliegt, Zurückkehren zum Aufbereiten und Festlegen der Informationen auf der Grundlage des aufbereiteten Text-Prompts und identifizierter Probleme, die einem oder mehreren Objekten zugeordnet sind, die im generierten GAI-Bild fehlen,
wobei die zweite vorbestimmte Varianz größer ist als die erste vorbestimmte Varianz;
zweites Bestimmen, ob das generierte GAI-Bild einer Liste vorbestimmter neuroästhetischer Kriterien (210) in Bezug auf einen zweiten vorbestimmten Schwellenwert (216) ausreichend entspricht;
als Reaktion auf das zweite Bestimmen, dass eine Nichtentsprechung unterhalb des zweiten vorbestimmten Schwellenwerts (216) vorliegt, Zurückkehren zum Aufbereiten und Festlegen der Informationen auf der Grundlage des aufbereiteten Text-Prompts und von Elementen aus der Liste vorbestimmter neuroästhetischer Kriterien (210), die im generierten GAI-Bild fehlen;
viertes Empfangen einer Heatmap des generierten GAI-Bilds;
Bereitstellen der Heatmap für den Benutzer zur Annahme oder Ablehnung;
als Reaktion auf die Ablehnung der Heatmap, Zurückkehren zum ersten Empfangen, um weitere Informationen zu erhalten; und
Weiterleiten des generierten GAI-Bildes zur weiteren Verwendung und/oder weiteren Verarbeitung als Reaktion auf mindestens eine Kombination aus dem ersten Bestimmen, dass die GAI-Textbeschreibung dem aufbereiteten Text-Prompt ausreichend entspricht, dem zweiten Bestimmen, dass das generierte GAI-Bild der Liste vorbestimmter neuroästhetischer Kriterien (210) ausreichend entspricht, und der Annahme der generierten Heatmap.

2. Das Verfahren nach Anspruch 1, wobei das erste Bestimmen Folgendes umfasst:
Durchführen eines semantischen Vergleichs der GAI-Textbeschreibung mit dem aufbereiteten Text-Prompt;
Bewerten eines Ergebnisses des Durchführens, um einen Score zu erzeugen; und
Auswerten des Scores im Verhältnis zum ersten vorbestimmten Schwellenwert (214).

3. Das Verfahren nach Anspruch 2, wobei als Reaktion auf das erste Bestimmen, dass eine Nichtentsprechung innerhalb der ersten vorbestimmten Varianz liegt, das Verfahren ferner Folgendes umfasst:
Bestimmen, dass der Score innerhalb der ersten Varianz von dem ersten vorbestimmten Schwellenwert (214) liegt.

4. Das Verfahren nach Anspruch 2, wobei als Reaktion auf das erste Bestimmen, dass eine Nichtentsprechung innerhalb der zweiten vorbestimmten Varianz liegt, das Verfahren ferner Folgendes umfasst:
Bestimmen, dass der Score über die erste Varianz von dem ersten vorbestimmten Schwellenwert (214) hinausgeht.

5. Das Verfahren nach Anspruch 1 oder 2, wobei das zweite Bestimmen, ob das GAI-Bild der Liste vorbestimmter neuroästhetischer Kriterien (210) ausreichend entspricht, ferner Folgendes umfasst:
Abfragen des GAI-Bildbeschreibungsmotors (204), um eine Anzahl von Elementen auf der Liste zu identifizieren, die im generierten GAI-Bild vorhanden sind; und
Bestimmen, anhand einer Antwort auf die Abfrage, ob die Anzahl der im generierten GAI-Bild vorhandenen Elemente den zweiten vorbestimmten Schwellenwert (216) erfüllt,
wobei, optional, als Reaktion auf das zweite Bestimmen, dass die Nichtentsprechung unterhalb des zweiten vorbestimmten Schwellenwerts (216) liegt, das Verfahren ferner Folgendes umfasst:
Bestimmen, dass das generierte GAI-Bild nicht genügend Elemente aus der Liste beinhaltet.

6. Das Verfahren nach irgendeinem der Ansprüche 1, 2 oder 5, wobei das vierte Empfangen der Heatmap ein Verarbeiten des generierten GAI-Bildes mit einem CRISP-Motor umfasst.

7. Ein System, umfassend:
einen Speicher, der Anweisungen speichert; und
einen Prozessor, der dazu programmiert ist, mit den Anweisungen zusammenzuwirken, um Operationen auszuführen, die Folgendes umfassen:
erstes Empfangen von Informationen, die Merkmale eines gewünschten Bildes beschreiben;
Aufbereiten der empfangenen Informationen zu einem Text-Prompt;
erstes Übermitteln des aufbereiteten Text-Prompts an einen Bildgenerator (202) auf Basis generativer künstlicher Intelligenz (GAI);
zweites Empfangen, von dem GAI-Bildgenerator (202), eines generierten GAI-Bildes, das dem aufbereiteten Text-Prompt entspricht;
drittes Empfangen, von einem GAI-Bildbeschreibungsmotor (204), einer GAI-Textbeschreibung des generierten GAI-Bildes;
erstes Bestimmen, ob die GAI-Textbeschreibung dem aufbereiteten Text-Prompt in Bezug auf einen ersten vorbestimmten Schwellenwert (214) ausreichend entspricht;
als Reaktion auf das erste Bestimmen, dass eine Nichtentsprechung (712a) innerhalb einer ersten vorbestimmten Varianz vom ersten vorbestimmten Schwellenwert (214) vorliegt, Zurückkehren zum ersten Übermitteln;
als Reaktion auf das erste Bestimmen, dass eine Nichtentsprechung (712b) innerhalb einer zweiten vorbestimmten Varianz vom ersten vorbestimmten Schwellenwert (214) vorliegt, Zurückkehren zum Aufbereiten und Festlegen der Informationen auf der Grundlage des aufbereiteten Text-Prompts und identifizierter Probleme, die einem oder mehreren Objekten zugeordnet sind, die im generierten GAI-Bild fehlen,
wobei die zweite vorbestimmte Varianz größer ist als die erste vorbestimmte Varianz;
zweites Bestimmen, ob das generierte GAI-Bild einer Liste vorbestimmter neuroästhetischer Kriterien (210) in Bezug auf einen zweiten vorbestimmten Schwellenwert (216) ausreichend entspricht;
als Reaktion auf das zweite Bestimmen, dass eine Nichtentsprechung unterhalb des zweiten vorbestimmten Schwellenwerts (216) vorliegt, Zurückkehren zum Aufbereiten und Festlegen der Informationen auf der Grundlage des aufbereiteten Text-Prompts und von Elementen aus der Liste vorbestimmter neuroästhetischer Kriterien (210), die im generierten GAI-Bild fehlen;
viertes Empfangen einer Heatmap des generierten GAI-Bilds;
Bereitstellen der Heatmap für den Benutzer zur Annahme oder Ablehnung;
als Reaktion auf die Ablehnung der Heatmap, Zurückkehren zum ersten Empfangen, um weitere Informationen zu erhalten; und
Weiterleiten des generierten GAI-Bildes zur weiteren Verwendung und/oder weiteren Verarbeitung als Reaktion auf mindestens eine Kombination aus dem ersten Bestimmen, dass die GAI-Textbeschreibung dem aufbereiteten Text-Prompt ausreichend entspricht, dem zweiten Bestimmen, dass das generierte GAI-Bild der Liste vorbestimmter neuroästhetischer Kriterien (210) ausreichend entspricht, und der Annahme der generierten Heatmap.

8. Das System nach Anspruch 7, wobei das erste Bestimmen Folgendes umfasst:
Durchführen eines semantischen Vergleichs der GAI-Textbeschreibung mit dem aufbereiteten Text-Prompt;
Bewerten eines Ergebnisses des Durchführens, um einen Score zu erzeugen; und
Auswerten des Scores im Verhältnis zum ersten vorbestimmten Schwellenwert (214).

9. Das System nach Anspruch 8, wobei als Reaktion auf das erste Bestimmen, dass eine Nichtentsprechung (712a) innerhalb der ersten vorbestimmten Varianz liegt, das System ferner Folgendes umfasst:
Bestimmen, dass der Score innerhalb der ersten Varianz von dem ersten vorbestimmten Schwellenwert (214) liegt.

10. Das System nach Anspruch 8, wobei als Reaktion auf das erste Bestimmen, dass eine Nichtentsprechung (712b) innerhalb der zweiten vorbestimmten Varianz liegt, das System ferner Folgendes umfasst:
Bestimmen, dass der Score über die erste Varianz von dem ersten vorbestimmten Schwellenwert (214) hinausgeht.

11. Das System nach Anspruch 7 oder 8, wobei das zweite Bestimmen, ob das GAI-Bild der Liste vorbestimmter neuroästhetischer Kriterien (210) ausreichend entspricht, ferner Folgendes umfasst:
Abfragen des GAI-Bildbeschreibungsmotors (204), um eine Anzahl von Elementen auf der Liste zu identifizieren, die im generierten GAI-Bild vorhanden sind; und
Bestimmen, anhand einer Antwort auf die Abfrage, ob die Anzahl der im generierten GAI-Bild vorhandenen Elemente den zweiten vorbestimmten Schwellenwert (216) erfüllt,
wobei, optional, als Reaktion auf das zweite Bestimmen, dass die Nichtentsprechung unterhalb des zweiten vorbestimmten Schwellenwerts (216) liegt, ferner Folgendes umfasst:
Bestimmen, dass das generierte GAI-Bild nicht genügend Elemente aus der Liste beinhaltet.

12. Das System nach irgendeinem der Ansprüche 7, 8 oder 11, wobei das vierte Empfangen der Heatmap ein Verarbeiten des generierten GAI-Bildes mit einem CRISP-Motor umfasst.

13. Ein nichtflüchtiges, computerlesbares Medium, das Anweisungen speichert, die, wenn sie von Computerhardware in Kombination mit Software ausgeführt werden, Operationen ausführen, umfassend:
erstes Empfangen von Informationen, die Merkmale eines gewünschten Bildes beschreiben;
Aufbereiten der empfangenen Informationen zu einem Text-Prompt;
erstes Übermitteln des aufbereiteten Text-Prompts an einen Bildgenerator (202) auf Basis generativer künstlicher Intelligenz (GAI);
zweites Empfangen, von dem GAI-Bildgenerator (202), eines generierten GAI-Bildes, das dem aufbereiteten Text-Prompt entspricht;
drittes Empfangen, von einem GAI-Bildbeschreibungsmotor (204), einer GAI-Textbeschreibung des generierten GAI-Bildes;
erstes Bestimmen, ob die GAI-Textbeschreibung dem aufbereiteten Text-Prompt in Bezug auf einen ersten vorbestimmten Schwellenwert (214) ausreichend entspricht;
als Reaktion auf das erste Bestimmen, dass eine Nichtentsprechung (712a) innerhalb einer ersten vorbestimmten Varianz vom ersten vorbestimmten Schwellenwert (214) vorliegt, Zurückkehren zum ersten Übermitteln;
als Reaktion auf das erste Bestimmen, dass eine Nichtentsprechung (712b) innerhalb einer zweiten vorbestimmten Varianz vom ersten vorbestimmten Schwellenwert (214) vorliegt, Zurückkehren zum Aufbereiten und Festlegen der Informationen auf der Grundlage des aufbereiteten Text-Prompts und identifizierter Probleme, die einem oder mehreren Objekten zugeordnet sind, die im generierten GAI-Bild fehlen,
wobei die zweite vorbestimmte Varianz größer ist als die erste vorbestimmte Varianz;
zweites Bestimmen, ob das generierte GAI-Bild einer Liste vorbestimmter neuroästhetischer Kriterien (210) in Bezug auf einen zweiten vorbestimmten Schwellenwert (216) ausreichend entspricht;
als Reaktion auf das zweite Bestimmen, dass eine Nichtentsprechung unterhalb des zweiten vorbestimmten Schwellenwerts (216) vorliegt, Zurückkehren zum Aufbereiten und Festlegen der Informationen auf der Grundlage des aufbereiteten Text-Prompts und von Elementen aus der Liste vorbestimmter neuroästhetischer Kriterien (210), die im generierten GAI-Bild fehlen;
viertes Empfangen einer Heatmap des generierten GAI-Bilds;
Bereitstellen der Heatmap für den Benutzer zur Annahme oder Ablehnung;
als Reaktion auf die Ablehnung der Heatmap, Zurückkehren zum ersten Empfangen, um weitere Informationen zu erhalten; und
Weiterleiten des generierten GAI-Bildes zur weiteren Verwendung und/oder weiteren Verarbeitung als Reaktion auf mindestens eine Kombination aus dem ersten Bestimmen, dass die GAI-Textbeschreibung dem aufbereiteten Text-Prompt ausreichend entspricht, dem zweiten Bestimmen, dass das generierte GAI-Bild der Liste vorbestimmter neuroästhetischer Kriterien (210) ausreichend entspricht, und der Annahme der generierten Heatmap.

14. Das nichtflüchtige, computerlesbare Medium nach Anspruch 13, wobei das erste Bestimmen Folgendes umfasst:
Durchführen eines semantischen Vergleichs der GAI-Textbeschreibung mit dem aufbereiteten Text-Prompt;
Bewerten eines Ergebnisses des Durchführens, um einen Score zu erzeugen; und
Auswerten des Scores im Verhältnis zum ersten vorbestimmten Schwellenwert (214),
wobei, optional, als Reaktion auf das erste Bestimmen, dass eine Nichtentsprechung innerhalb der ersten vorbestimmten Varianz liegt, ferner Folgendes umfasst:
Bestimmen, dass der Score innerhalb der ersten Varianz von dem ersten vorbestimmten Schwellenwert (214) liegt, oder Bestimmen, dass der Score über die erste Varianz von dem ersten vorbestimmten Schwellenwert (214) hinausgeht.

15. Das nichtflüchtige, computerlesbare Medium nach Anspruch 13 oder 14, wobei das zweite Bestimmen, ob das GAI-Bild der Liste vorbestimmter neuroästhetischer Kriterien (210) ausreichend entspricht, ferner Folgendes umfasst:
Abfragen des GAI-Bildbeschreibungsmotors (204), um eine Anzahl von Elementen auf der Liste zu identifizieren, die im generierten GAI-Bild vorhanden sind; und
Bestimmen, anhand einer Antwort auf die Abfrage, ob die Anzahl der im generierten GAI-Bild vorhandenen Elemente den zweiten vorbestimmten Schwellenwert (216) erfüllt,
wobei, optional, als Reaktion auf das zweite Bestimmen, dass die Nichtentsprechung unterhalb des zweiten vorbestimmten Schwellenwerts (216) liegt, das Verfahren ferner Folgendes umfasst:
Bestimmen, dass das generierte GAI-Bild nicht genügend Elemente aus der Liste beinhaltet.

## Revendications

1. Un procédé mis en œuvre par ordinateur, comprenant :
la première réception d'informations décrivant des caractéristiques d'une image souhaitée ;
l'enrichissement des informations reçues pour en faire un prompt textuel ;
la première soumission du prompt textuel enrichi à un générateur d'images à intelligence artificielle générative (GAI) (202) ;
la deuxième réception en provenance du générateur d'images GAI (202), d'une image GAI générée correspondant au prompt textuel enrichi ;
la troisième réception, en provenance d'un moteur de description d'images GAI (204), d'une description textuelle GAI de l'image GAI générée ;
la première détermination de si la description textuelle GAI correspond suffisamment au prompt textuel enrichi par rapport à un premier seuil prédéterminé (214) ;
en réponse à la première détermination constatant une non-correspondance (712a) à l'intérieur d'une première variance prédéterminée par rapport au premier seuil prédéterminé (214), revenir à la première soumission ;
en réponse à la première détermination constatant une non-correspondance (712b) à l'intérieur d'une deuxième variance prédéterminée par rapport au premier seuil prédéterminé (214), revenir à l'enrichissement et à la configuration des informations sur la base du prompt textuel enrichi et de problèmes identifiés associés à un ou plusieurs objets qui ne sont pas présents dans l'image GAI générée,
sachant que la deuxième variance prédéterminée est supérieure à la première variance prédéterminée ;
la deuxième détermination de si l'image GAI générée correspond suffisamment à une liste de critères de neuroesthétique prédéterminés (210) par rapport à un deuxième seuil prédéterminé (216) ;
en réponse à la deuxième détermination constatant une non-correspondance inférieure au deuxième seuil prédéterminé (216), revenir à l'enrichissement et à la configuration des informations sur la base du prompt textuel enrichi et d'éléments de la liste des critères de neuroesthétique prédéterminés (210) qui ne sont pas présents dans l'image GAI générée ;
la quatrième réception d'une carte thermique de l'image GAI générée ;
la fourniture de la carte thermique à l'utilisateur pour acceptation ou rejet ;
en réponse au rejet de la carte thermique, revenir à la première réception pour des informations supplémentaires ; et
le réacheminement de l'image GAI générée pour une utilisation ultérieure et/ou un traitement ultérieur en réponse à au moins une combinaison de la première détermination constatant que la description textuelle GAI correspond suffisamment au prompt textuel enrichi, de la deuxième détermination constatant que l'image GAI générée correspond suffisamment à la liste de critères de neuroesthétique prédéterminés (210), et de l'acceptation de la carte thermique générée.

2. Le procédé d'après la revendication 1, sachant que la première détermination comprend :
la réalisation d'une comparaison sémantique entre la description textuelle GAI et le prompt textuel enrichi ;
l'attribution d'un score au résultat de la réalisation afin de générer ledit score ; et
l'évaluation du score par rapport au premier seuil prédéterminé (214).

3. Le procédé d'après la revendication 2, sachant que, en réponse à la première détermination constatant qu'une non-correspondance se situe à l'intérieur de la première variance prédéterminée, le procédé comprend en outre :
la détermination du fait que le score se situe à l'intérieur de la première variance par rapport au premier seuil prédéterminé (214).

4. Le procédé d'après la revendication 2, sachant que, en réponse à la première détermination constatant qu'une non-correspondance se situe à l'intérieur de la deuxième variance prédéterminée, le procédé comprend en outre :
la détermination du fait que le score se situe au-delà de la première variance par rapport au premier seuil prédéterminé (214).

5. Le procédé d'après la revendication 1 ou 2, sachant que la deuxième détermination de si l'image GAI correspond suffisamment à la liste de critères de neuroesthétique prédéterminés (210) comprend en outre :
l'interrogation du moteur de description d'images GAI (204) afin d'identifier si un nombre d'éléments de la liste sont présents dans l'image GAI générée ; et
la détermination, à partir d'une réponse à l'interrogation, de si le nombre d'éléments présents dans l'image GAI générée satisfait au deuxième seuil prédéterminé (216), sachant que, facultativement, en réponse à la deuxième détermination constatant que la non-correspondance est inférieure au deuxième seuil prédéterminé (216), le procédé comprend en outre :
la détermination que l'image GAI générée ne comprend pas suffisamment d'éléments de la liste.

6. Le procédé d'après l'une quelconque des revendications 1, 2 ou 5, sachant que la quatrième réception de la carte thermique comprend le traitement de l'image GAI générée à l'aide d'un moteur CRISP.

7. Un système, comprenant :
une mémoire stockant des instructions ; et
un processeur programmé pour coopérer avec les instructions afin d'effectuer des opérations comprenant :
la première réception d'informations décrivant des caractéristiques d'une image souhaitée ;
l'enrichissement des informations reçues pour en faire un prompt textuel ;
la première soumission du prompt textuel enrichi à un générateur d'images à intelligence artificielle générative (GAI) (202) ;
la deuxième réception en provenance du générateur d'images GAI (202), d'une image GAI générée correspondant au prompt textuel enrichi ;
la troisième réception, en provenance d'un moteur de description d'images GAI (204), d'une description textuelle GAI de l'image GAI générée ;
la première détermination de si la description textuelle GAI correspond suffisamment au prompt textuel enrichi par rapport à un premier seuil prédéterminé (214) ;
en réponse à la première détermination constatant une non-correspondance (712a) à l'intérieur d'une première variance prédéterminée par rapport au premier seuil prédéterminé (214), revenir à la première soumission ;
en réponse à la première détermination constatant une non-correspondance (712b) à l'intérieur d'une deuxième variance prédéterminée par rapport au premier seuil prédéterminé (214), revenir à l'enrichissement et à la configuration des informations sur la base du prompt textuel enrichi et de problèmes identifiés associés à un ou plusieurs objets qui ne sont pas présents dans l'image GAI générée,
sachant que la deuxième variance prédéterminée est supérieure à la première variance prédéterminée ;
la deuxième détermination de si l'image GAI générée correspond suffisamment à une liste de critères de neuroesthétique prédéterminés (210) par rapport à un deuxième seuil prédéterminé (216) ;
en réponse à la deuxième détermination constatant une non-correspondance inférieure au deuxième seuil prédéterminé (216), revenir à l'enrichissement et à la configuration des informations sur la base du prompt textuel enrichi et d'éléments de la liste des critères de neuroesthétique prédéterminés (210) qui ne sont pas présents dans l'image GAI générée ;
la quatrième réception d'une carte thermique de l'image GAI générée ;
la fourniture de la carte thermique à l'utilisateur pour acceptation ou rejet ;
en réponse au rejet de la carte thermique, revenir à la première réception pour des informations supplémentaires ; et
le réacheminement de l'image GAI générée pour une utilisation ultérieure et/ou un traitement ultérieur en réponse à au moins une combinaison de la première détermination constatant que la description textuelle GAI correspond suffisamment au prompt textuel enrichi, de la deuxième détermination constatant que l'image GAI générée correspond suffisamment à la liste de critères de neuroesthétique prédéterminés (210), et de l'acceptation de la carte thermique générée.

8. Le système d'après la revendication 7, sachant que la première détermination comprend :
la réalisation d'une comparaison sémantique entre la description textuelle GAI et le prompt textuel enrichi ;
l'attribution d'un score au résultat de la réalisation afin de générer ledit score ; et
l'évaluation du score par rapport au premier seuil prédéterminé (214).

9. Le système d'après la revendication 8, sachant que, en réponse à la première détermination constatant qu'une non-correspondance (712a) se situe à l'intérieur de la première variance prédéterminée, le système comprend en outre :
la détermination du fait que le score se situe à l'intérieur de la première variance par rapport au premier seuil prédéterminé (214).

10. Le système d'après la revendication 8, sachant que, en réponse à la première détermination constatant qu'une non-correspondance (712b) se situe à l'intérieur de la deuxième variance prédéterminée, le système comprend en outre :
la détermination du fait que le score se situe au-delà de la première variance par rapport au premier seuil prédéterminé (214).

11. Le système d'après la revendication 7 ou 8, sachant que la deuxième détermination de si l'image GAI correspond suffisamment à la liste de critères de neuroesthétique prédéterminés (210) comprend en outre :
l'interrogation du moteur de description d'images GAI (204) afin d'identifier si un nombre d'éléments de la liste sont présents dans l'image GAI générée ; et
la détermination, à partir d'une réponse à l'interrogation, de si le nombre d'éléments présents dans l'image GAI générée satisfait au deuxième seuil prédéterminé (216),
sachant que, facultativement, en réponse à la deuxième détermination constatant que la non-correspondance est inférieure au deuxième seuil prédéterminé (216), le système comprend en outre :
la détermination que l'image GAI générée ne comprend pas suffisamment d'éléments de la liste.

12. Le système d'après l'une quelconque des revendications 7, 8 ou 11, sachant que la quatrième réception de la carte thermique comprend le traitement de l'image GAI générée à l'aide d'un moteur CRISP.

13. Un support non transitoire lisible par ordinateur stockant des instructions qui, lorsqu'elles sont exécutées par un matériel informatique en combinaison avec un logiciel, effectuent des opérations, comprenant :
la première réception d'informations décrivant des caractéristiques d'une image souhaitée ;
l'enrichissement des informations reçues pour en faire un prompt textuel ;
la première soumission du prompt textuel enrichi à un générateur d'images à intelligence artificielle générative (GAI) (202) ;
la deuxième réception en provenance du générateur d'images GAI (202), d'une image GAI générée correspondant au prompt textuel enrichi ;
la troisième réception, en provenance d'un moteur de description d'images GAI (204), d'une description textuelle GAI de l'image GAI générée ;
la première détermination de si la description textuelle GAI correspond suffisamment au prompt textuel enrichi par rapport à un premier seuil prédéterminé (214) ;
en réponse à la première détermination constatant une non-correspondance (712a) à l'intérieur d'une première variance prédéterminée par rapport au premier seuil prédéterminé (214), revenir à la première soumission ;
en réponse à la première détermination constatant une non-correspondance (712b) à l'intérieur d'une deuxième variance prédéterminée par rapport au premier seuil prédéterminé (214), revenir à l'enrichissement et à la configuration des informations sur la base du prompt textuel enrichi et de problèmes identifiés associés à un ou plusieurs objets qui ne sont pas présents dans l'image GAI générée,
sachant que la deuxième variance prédéterminée est supérieure à la première variance prédéterminée ;
la deuxième détermination de si l'image GAI générée correspond suffisamment à une liste de critères de neuroesthétique prédéterminés (210) par rapport à un deuxième seuil prédéterminé (216) ;
en réponse à la deuxième détermination constatant une non-correspondance inférieure au deuxième seuil prédéterminé (216), revenir à l'enrichissement et à la configuration des informations sur la base du prompt textuel enrichi et d'éléments de la liste des critères de neuroesthétique prédéterminés (210) qui ne sont pas présents dans l'image GAI générée ;
la quatrième réception d'une carte thermique de l'image GAI générée ;
la fourniture de la carte thermique à l'utilisateur pour acceptation ou rejet ;
en réponse au rejet de la carte thermique, revenir à la première réception pour des informations supplémentaires ; et
le réacheminement de l'image GAI générée pour une utilisation ultérieure et/ou un traitement ultérieur en réponse à au moins une combinaison de la première détermination constatant que la description textuelle GAI correspond suffisamment au prompt textuel enrichi, de la deuxième détermination constatant que l'image GAI générée correspond suffisamment à la liste de critères de neuroesthétique prédéterminés (210), et de l'acceptation de la carte thermique générée.

14. Le support non transitoire lisible par ordinateur d'après la revendication 13, sachant que la première détermination comprend :
la réalisation d'une comparaison sémantique entre la description textuelle GAI et le prompt textuel enrichi ;
l'attribution d'un score au résultat de la réalisation afin de générer ledit score ; et
l'évaluation du score par rapport au premier seuil prédéterminé (214),
sachant que, facultativement, en réponse à la première détermination constatant une non-correspondance à l'intérieur d'une première variance prédéterminée, comprenant en outre
la détermination du fait que le score se situe à l'intérieur de la première variance par rapport au premier seuil prédéterminé (214), ou la détermination du fait que le score se situe au-delà de la première variance par rapport au premier seuil prédéterminé (214).

15. Le support non transitoire lisible par ordinateur d'après la revendication 13 ou 14, sachant que la deuxième détermination de si l'image GAI correspond suffisamment à la liste de critères de neuroesthétique prédéterminés (210) comprend en outre :
l'interrogation du moteur de description d'images GAI (204) afin d'identifier si un nombre d'éléments de la liste sont présents dans l'image GAI générée ; et
la détermination, à partir d'une réponse à l'interrogation, de si le nombre d'éléments présents dans l'image GAI générée satisfait au deuxième seuil prédéterminé (216),
sachant que, facultativement, en réponse à la deuxième détermination constatant que la non-correspondance est inférieure au deuxième seuil prédéterminé (216), comprend en outre :
la détermination que l'image GAI générée ne comprend pas suffisamment d'éléments de la liste.
